# FASCICULE DE BREVET EUROPEEN

(11) **EP 3 308 057 B1**
(45) Date de publication et mention de la délivrance du brevet: **05.08.2020**
(21) Numéro de dépôt: 16733319.4
(22) Date de dépôt: 10.06.2016
(51) Int. Cl.: F16H 61/4017, F16H 61/4078, F15B 13/02

(54) **DISPOSITIF DE LIMITATION DE PRESSION, NOTAMMENT POUR SYSTÈME D'ASSISTANCE HYDRAULIQUE DE VÉHICULES**
DRUCKBEGRENZUNGSVORRICHTUNG, INSBESONDERE FÜR EIN HYDRAULISCHES HILFSSYSTEM FÜR FAHRZEUGE
PRESSURE LIMITING DEVICE, IN PARTICULAR FOR A HYDRAULIC ASSIST SYSTEM FOR VEHICLES

(30) Priorité: 10.06.2015 FR 1555295; 12.11.2015 FR 1560843; 12.11.2015 EP 15076491
(43) Date de publication de la demande: 18.04.2018
(73) Titulaire: Poclain Hydraulics Industrie, 60410 Verberie (FR)
(72) Inventeur: BOZIC, Ante, 60410 Verberie (FR); PETERNEL, Luka, 60410 Verberie (FR); CELIK, Anze, 60410 Verberie (FR)
(74) Mandataire: Regimbeau
(86) Numéro de dépôt international: PCT/EP2016/063379
(87) Numéro de publication internationale: WO 2016/198655

(56) Documents cités:
- FR-A1- 2 996 176
- US-A- 4 696 162
- US-A1- 2005 097 887
- US-A1- 2005 247 189
- US-A1- 2011 240 897
- US-A1- 2014 251 464

## Description

### DOMAINE TECHNIQUE GENERAL

L'invention concerne la gestion des surpressions des circuits hydrauliques, et plus particulièrement les dispositifs de type « limiteur de pression » ou « soupape de protection ».
L'invention s'applique notamment aux circuits d'assistance hydraulique pour véhicule.
Les assistances hydrauliques sont généralement effectuées à l'aide de machines hydrauliques qui peuvent fournir du couple aux roues non motorisées par une transmission mécanique, ou roues porteuses. Ces machines transforment l'énergie hydraulique d'une huile sous pression en une énergie mécanique, ou inversement.

### ETAT DE L'ART

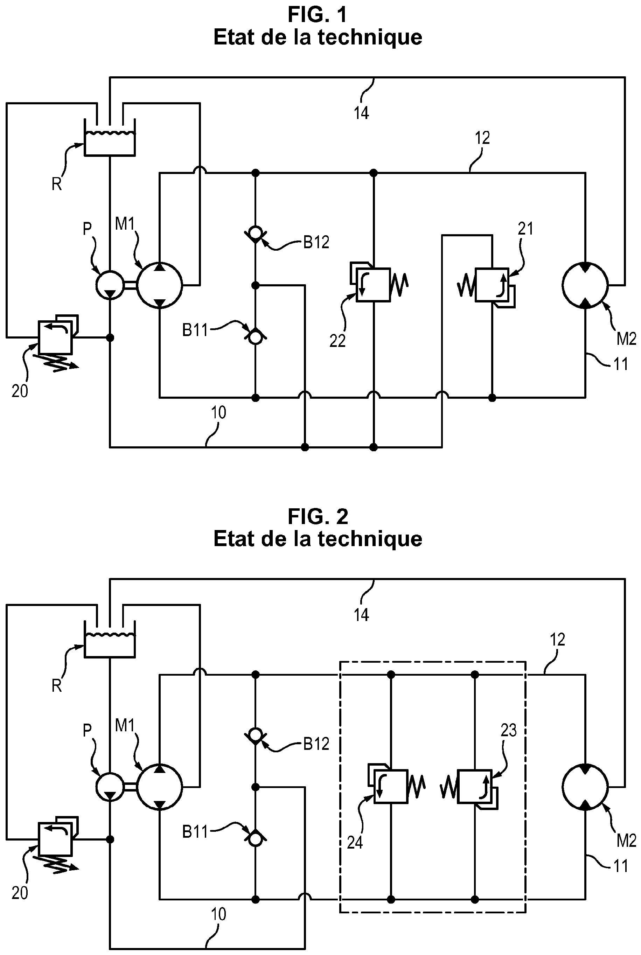

La figure 1 représente un schéma hydraulique de l'art antérieur. Sur un véhicule, une première machine hydraulique M1 est montée sur un premier essieu, par exemple l'essieu avant, et une deuxième machine hydraulique M2 est montée sur un deuxième essieu, par exemple l'essieu arrière. Par machines, on signifie qu'elles peuvent fonctionner en moteur ou en pompe.
La configuration présentée correspond à une « chaîne à vélo » (document FR2996176), c'est-à-dire qu'en utilisation principale une première des machines M1 ou M2 fait office de pompe pour une deuxième des machine M1 ou M2 respectivement qui fait office de moteur.
Le véhicule comprend généralement un moteur thermique (non représenté sur les figures) qui entraine un essieu ou se trouve la première machine hydraulique M1.

A cette fin, le refoulement de la première machine M1 est relié à l'admission de la deuxième machine M2 par une ligne 11 dite haute pression et le refoulement de la deuxième machine M2 est relié à l'admission de la première machine M1 par une ligne 12 dite basse pression.
Les termes de haute et basse pression correspondent à une utilisation en marche avant avec apport de couple (« utilisation principale »).
Par conséquent, comme les pressions peuvent s'inverser, les termes de première ligne 11 et de deuxième ligne 12 seront préférés.
La première et la deuxième ligne 11, 12 fonctionnent en circuit fermé et peuvent être sujettes à des surpressions pouvant endommager les machines M1, M2 ou les joints présents sur le circuit.
A titre d'exemple, les pressions sont de l'ordre de 400 bars dans une ligne et de quelques dizaines de bars dans l'autre ligne, à tout le moins une pression de gavage.
Pour protéger le circuit hydraulique et notamment les première et deuxième lignes 11, 12, il est connu de disposer deux limiteurs de pression associés respectivement à ces lignes.

La **figure 1** représente une première variante de l'état de l'art : un limiteur de pression 21 est disposé entre la première ligne 11 et une ligne de gavage 10, un autre limiteur 22 est disposé entre la deuxième ligne 12 et la ligne de gavage 10.
Chaque limiteur 21, 22 peut être taré à la valeur souhaitée.
La ligne de gavage 10 est une ligne permettant à une pompe de gavage P d'alimenter en huile les première et deuxième lignes 11, 12, à partir d'un réservoir R, afin d'enclencher l'assistance hydraulique. Du fait d'un limiteur de pression 20 en parallèle de la pompe P, le circuit de gavage 10 permet l'évacuation de surpression. Des clapets anti-retour B11, B12 servent au gavage.
Cette solution utilise deux organes de protection (les limiteurs de pression 21, 22).

La **figure 2** représente une deuxième variante de l'état de l'art : deux limiteurs de pression 23, 24 sont disposés entre les première et deuxième lignes 11, 12. Une ligne étant toujours en pression moindre, elle pourra supporter la surpression présente dans l'autre.
Cette solution utilise elle aussi deux organes de protection (les limiteurs de pression 23, 24). On retrouve également sur la figure 2 deux clapets anti-retour B11, B12 qui servent au gavage.
Sur la figure 2 une ligne reliant le carter de la machine M2 au réservoir R, est référencée 14.

La **figure 3** représente une troisième variante de l'état de l'art : un sélecteur haute-pression 25 sélectionne la ligne de plus haute pression entre la première et la deuxième ligne 11, 12 et l'envoie vers la ligne de gavage 10 *via* un limiteur de pression 26. De cette façon, on supprime un limiteur mais il faut ajouter un sélecteur de circuit 25.
Cette solution utilise elle aussi deux organes de protection. On retrouve également sur la figure 2 deux clapets anti-retour B11, B12 qui servent au gavage.
Pour optimiser l'espace disponible et diminuer les coûts de fabrication, il est recherché des organes plus simples effectuant les mêmes fonctions.

Le document US 2005/097887 A divulgue un dispositif selon le préambule de la revendication 1.

### PRESENTATION DE L'INVENTION

Pour cela, l'invention propose un dispositif de limitation de pression adapté pour être installé dans un système comprenant une première ligne d'alimentation et une deuxième ligne d'alimentation pouvant comprendre de l'huile sous pression et comprenant une ligne d'évacuation et/ou gavage, le dispositif de limitation comprenant des moyens formant deux clapets associés respectivement à l'une des deux lignes et adaptés pour s'ouvrir en cas de surpression au-dessus d'un seuil prédéterminé sur la ligne d'alimentation associée afin de décharger la surpression correspondante vers la ligne d'évacuation et/ou gavage ou l'autre ligne d'alimentation, les deux clapets comprenant une tige support commune qui travaille à la traction sous la sollicitation d'au moins un ressort définissant un tarage qui correspond audit seuil prédéterminé.
Selon une autre caractéristique avantageuse de l'invention, le dispositif de limitation de pression intègre des moyens qui forment deux clapets anti-retours associés respectivement à l'une des deux lignes, pour le gavage.
La limitation de pression se fait dorénavant à l'aide d'un seul dispositif, ce qui améliore la compacité du système ainsi que son coût de fabrication.
L'invention concerne également les systèmes d'assistance et les véhicules équipés d'un dispositif de limitation de pression conforme à l'invention.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 à 3 représentent des variantes de l'art antérieur,

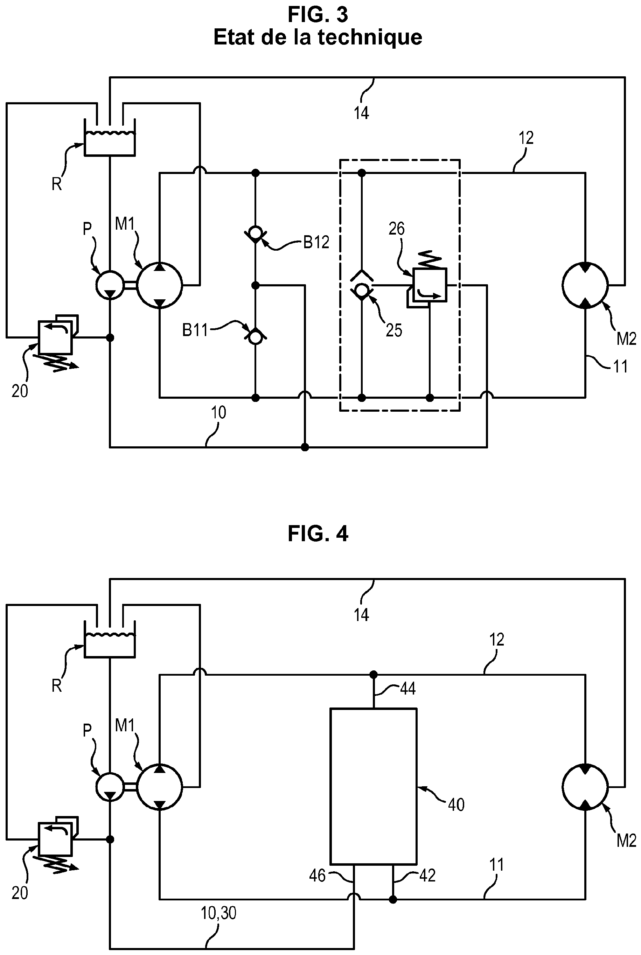

- La figure 4 représente schématiquement un circuit d'assistance intégrant un dispositif de limitation de pression 40 conforme à l'invention qui intègre des moyens qui remplissent la même fonction que les deux clapets anti-retours B11 et B12 et les deux limiteurs 21 et 22 ou 23, 24 ou 25, 26 représentés sur les figures 1 à 3,

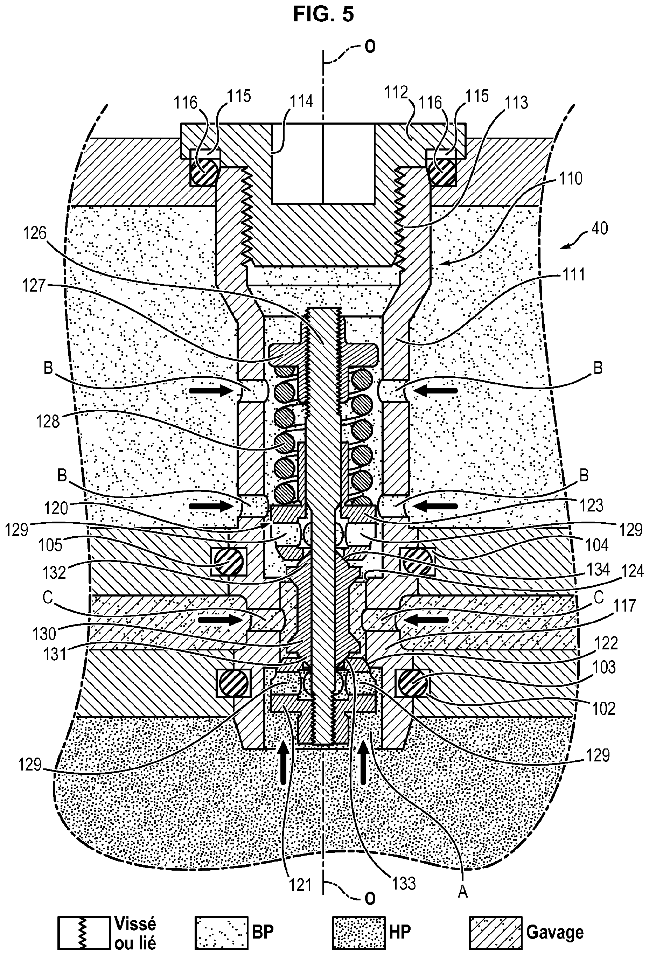

- La figure 5 représente schématiquement la structure d'un dispositif conforme à une première variante de l'invention,

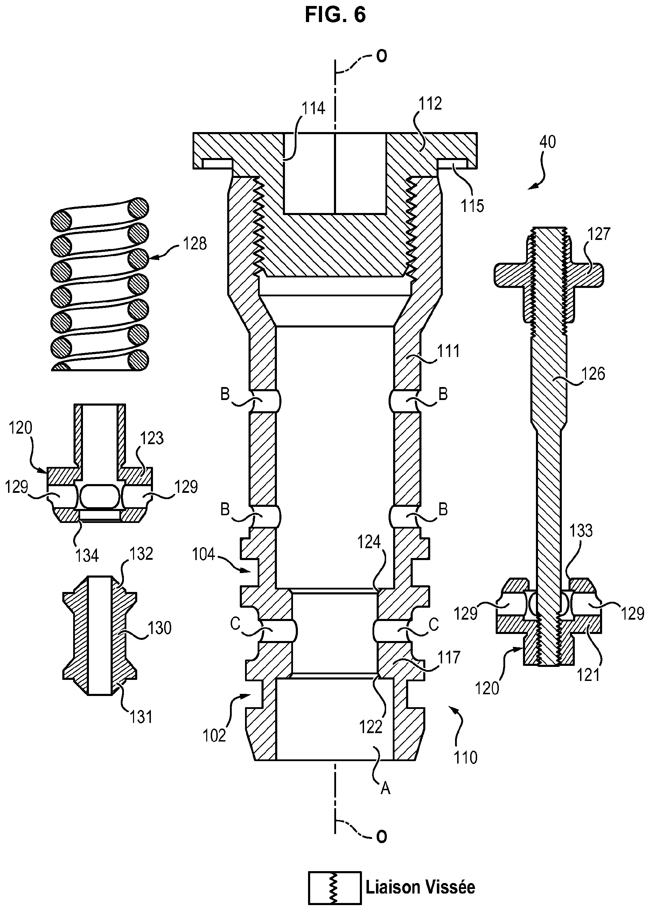

- La figure 6 représente de manière séparée les différentes pièces composant la même première variante conforme à l'invention,

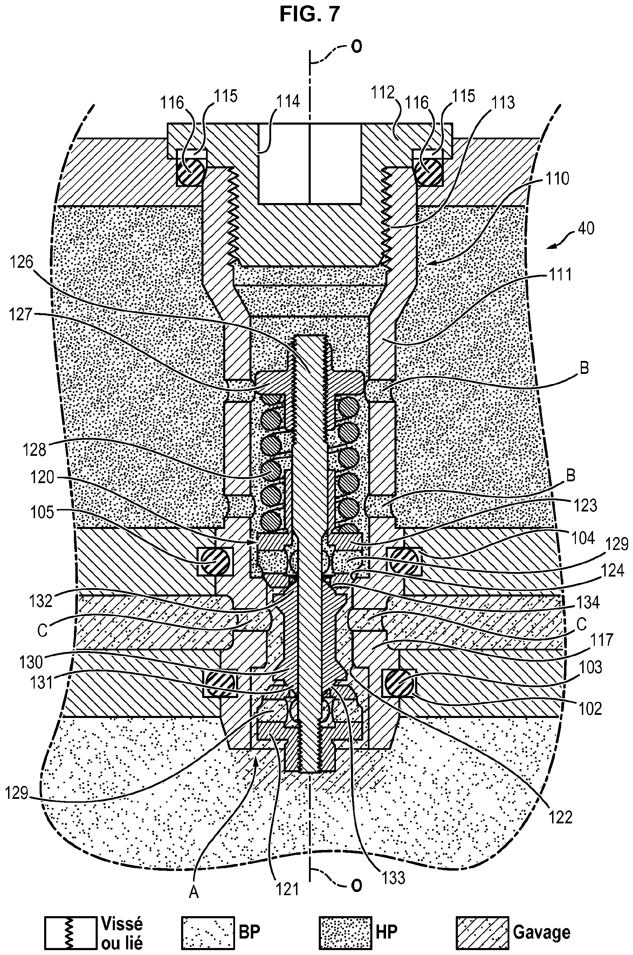

- La figure 7 représente une vue similaire à la figure 5 mais après déplacement d'un sélecteur dû à une inversion de la ligne haute pression par rapport à la figure 5,

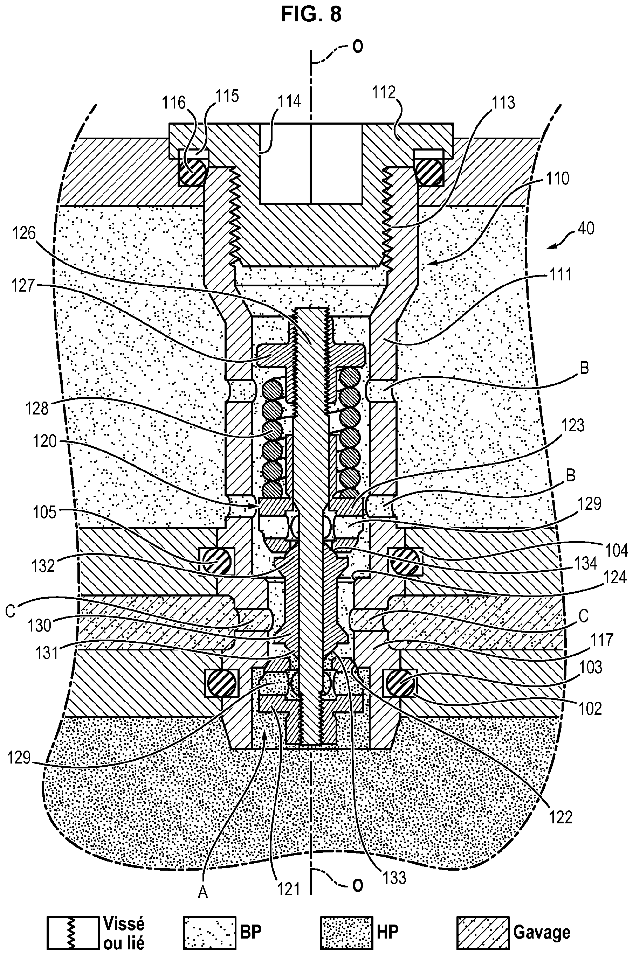

- La figure 8 représente une autre vue de la première variante de l'invention lors du passage d'une première ligne en surpression,

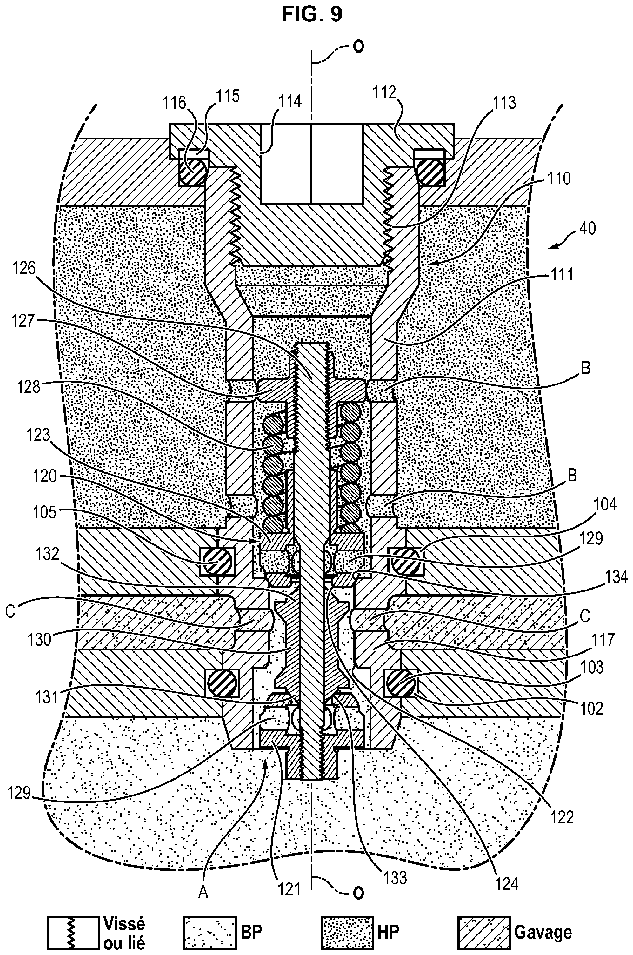

- La figure 9 représente une autre vue de la première variante de l'invention lors du passage de la deuxième ligne en surpression,

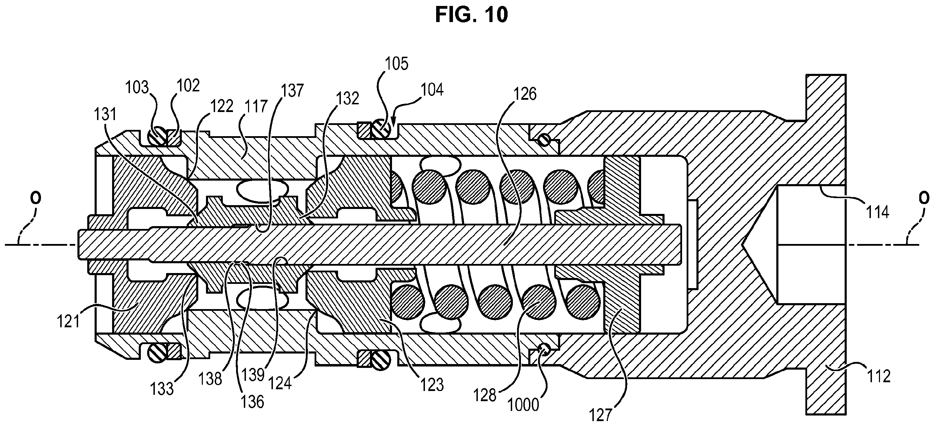

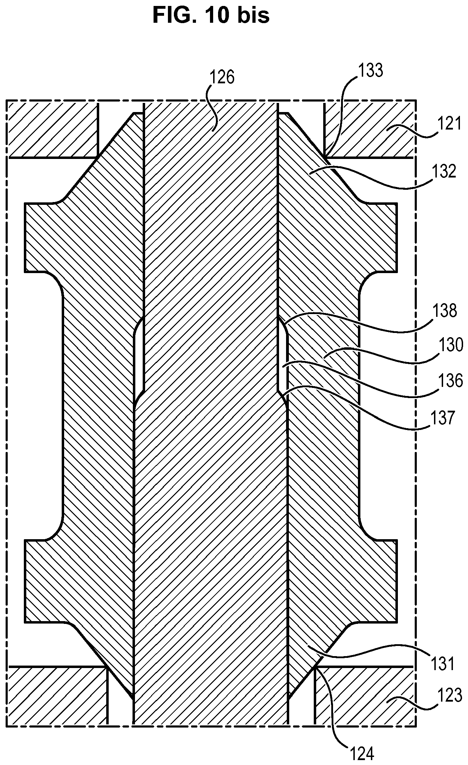

- la figure 10 représente une adaptation possible de la première variante de l'invention,
- la figure 10 bis est une vue agrandie partielle de la figure 10 et illustre la chambre d'amortissement formée entre deux épaulements réalisés respectivement sur la tige et sur le corps obturateur de surpression et dont le volume varie lors d'un déplacement relatif entre ces deux éléments, pour générer un effet d'amortissement par écoulement d'huile dans un canal de fuite qui communique avec la chambre et qui est formé entre la tige et le corps obturateur de surpression,

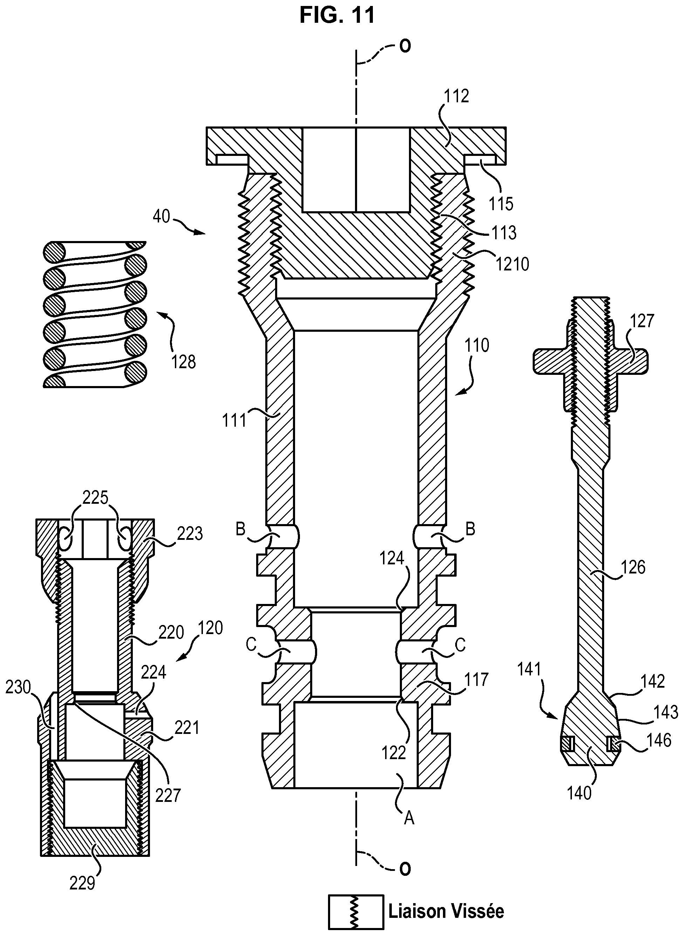

- La figure 11 représente de manière séparée les différentes pièces composant une deuxième variante conforme à l'invention,

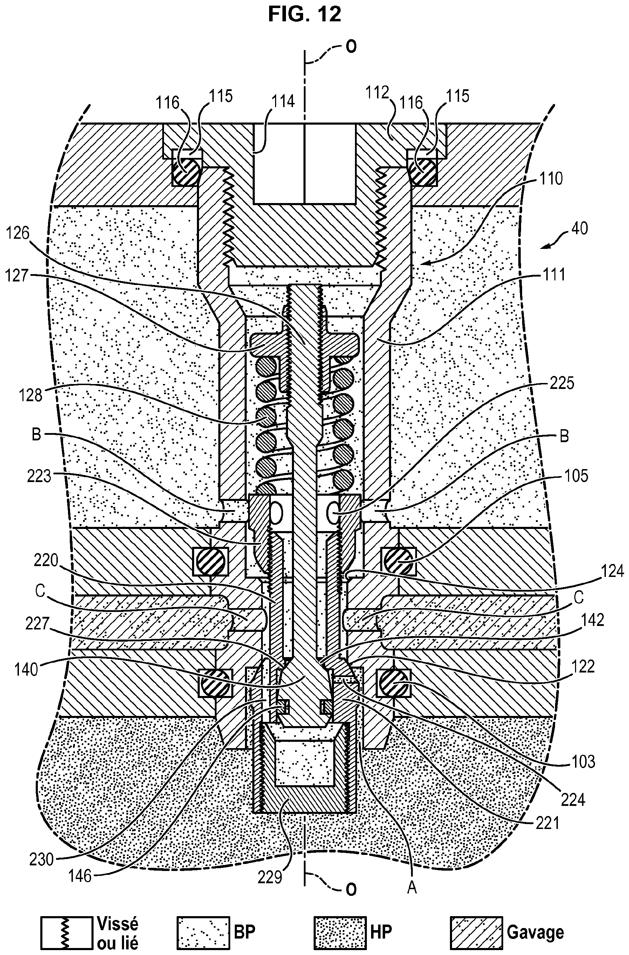

- La figure 12 représente la même deuxième variante de l'invention dans une position de sélection correspondant à une application de la haute pression par l'orifice d'entrée située en bas de la figure, le gavage s'échappant par conséquent par la ligne basse pression communiquant avec les orifices situés en partie supérieure de la figure,

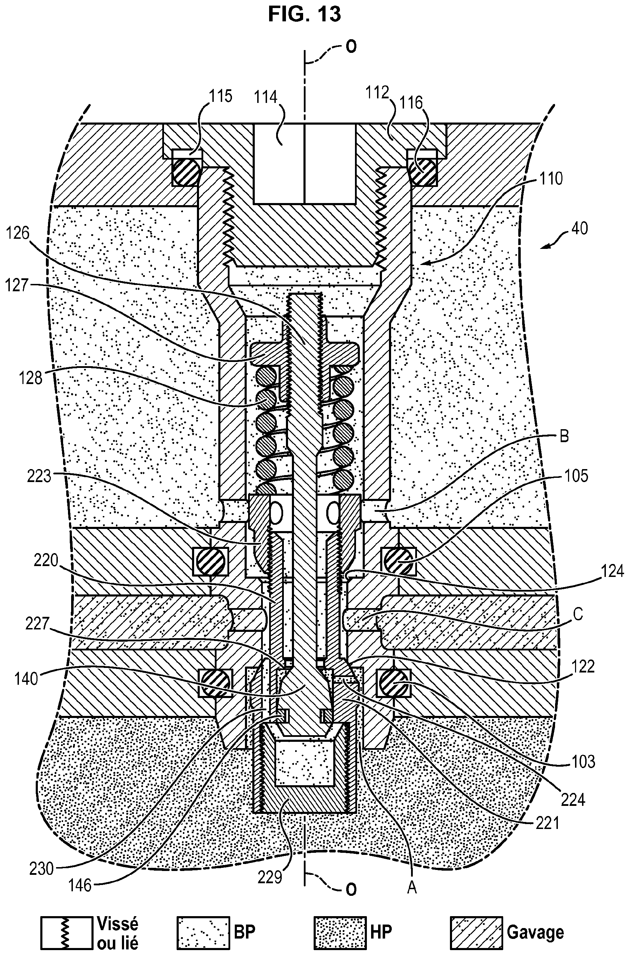

- La figure 13 représente une autre vue de la deuxième variante de l'invention lors du passage d'une première ligne en surpression,

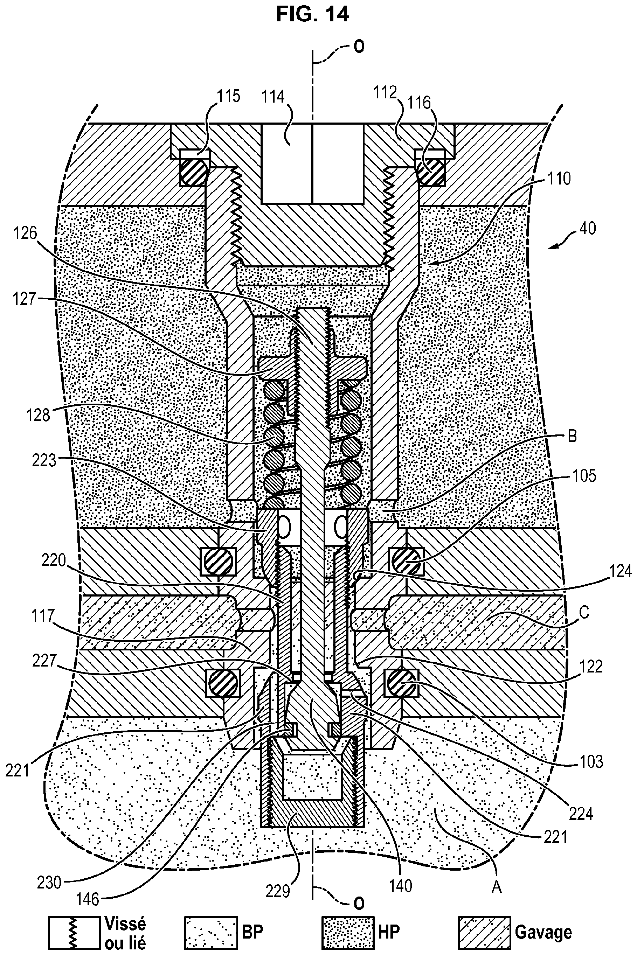

- La figure 14 représente une autre vue de la deuxième variante de l'invention lors du passage de la deuxième ligne en surpression,

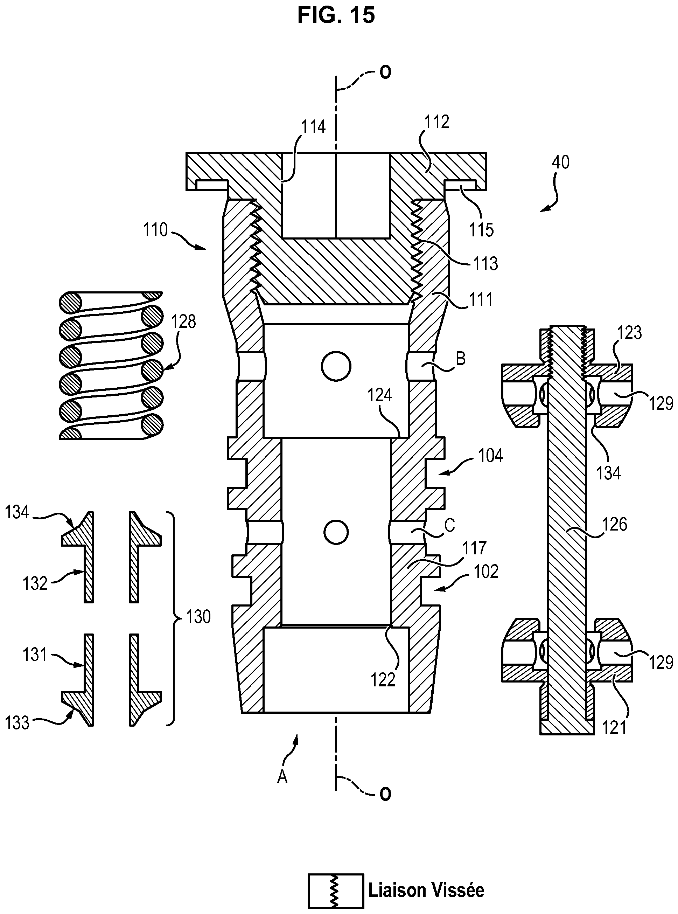

- La figure 15 représente de manière séparée les différentes pièces composant une troisième variante conforme à l'invention,

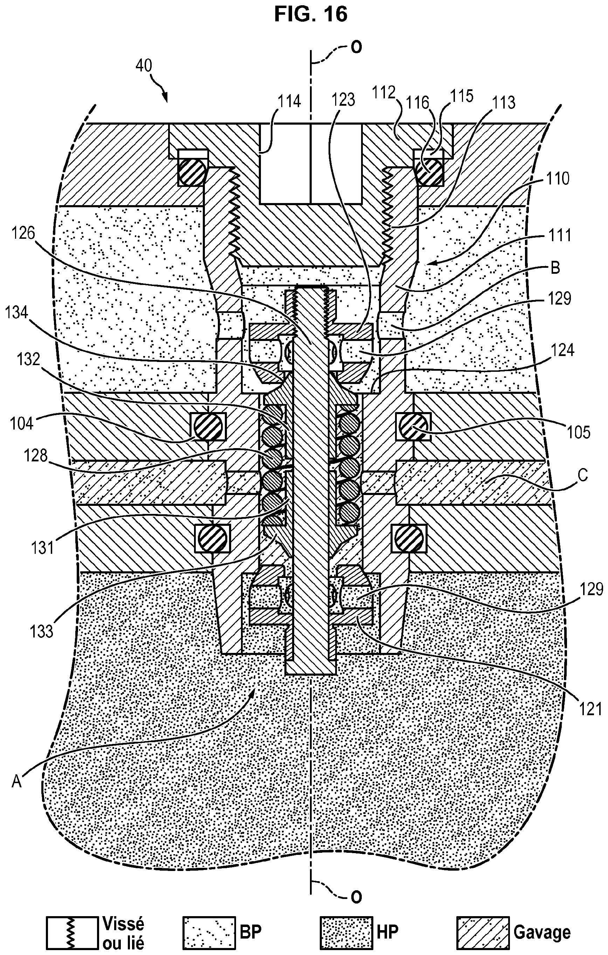

- La figure 16 représente la même troisième variante de l'invention dans un état d'application d'une haute pression sur la ligne qui communique avec l'orifice d'entrée situé en partie inférieure de la figure et ceci dans le cas d'une surpression,

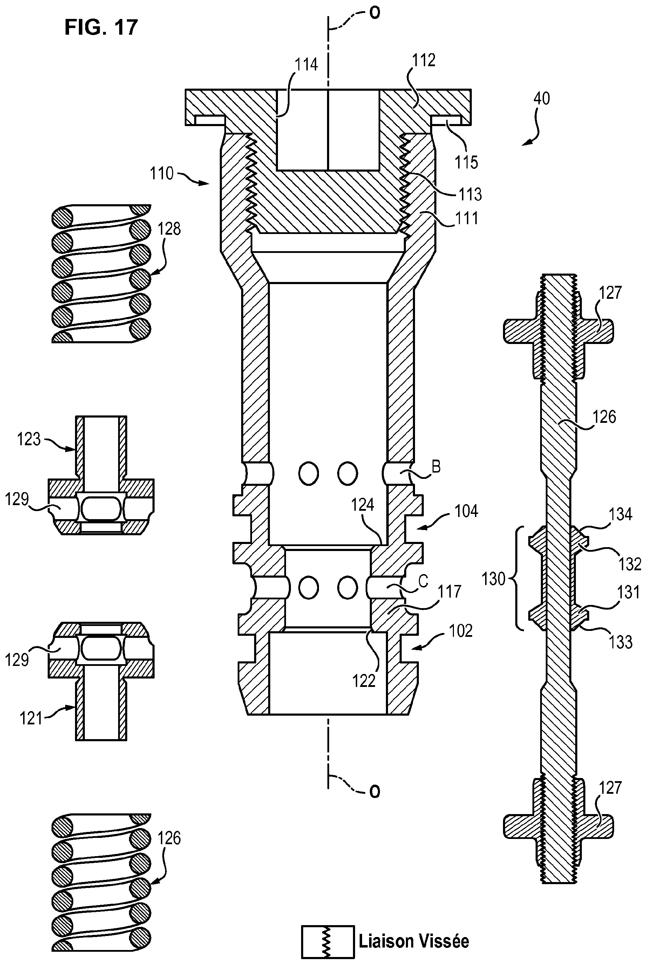

- La figure 17 représente de manière séparée les différentes pièces composant une quatrième variante conforme à l'invention,

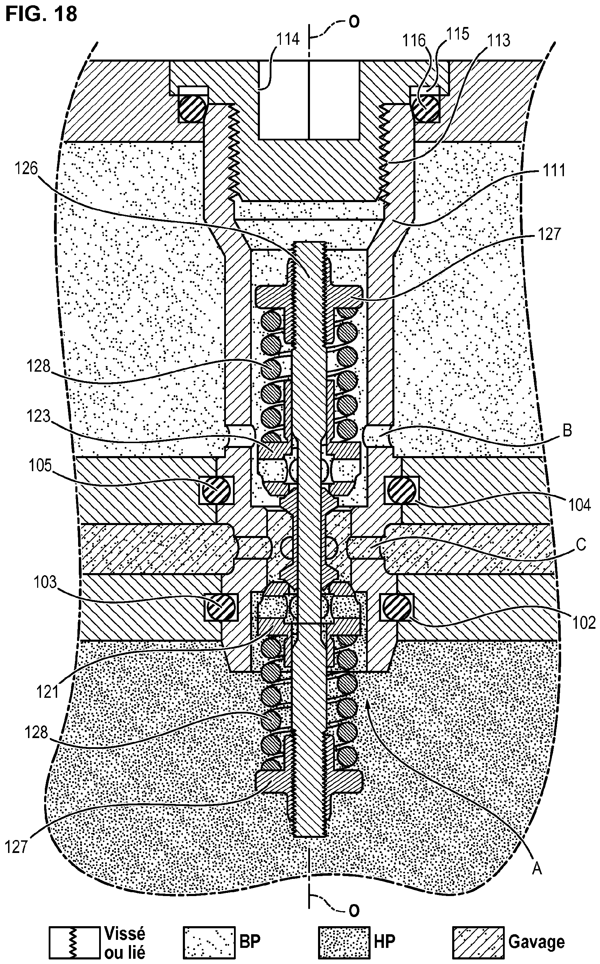

- La figure 18 représente la même quatrième variante dans une position de sélection par application de la haute pression sur une ligne qui communique avec l'orifice situé en partie inférieure de la figure,

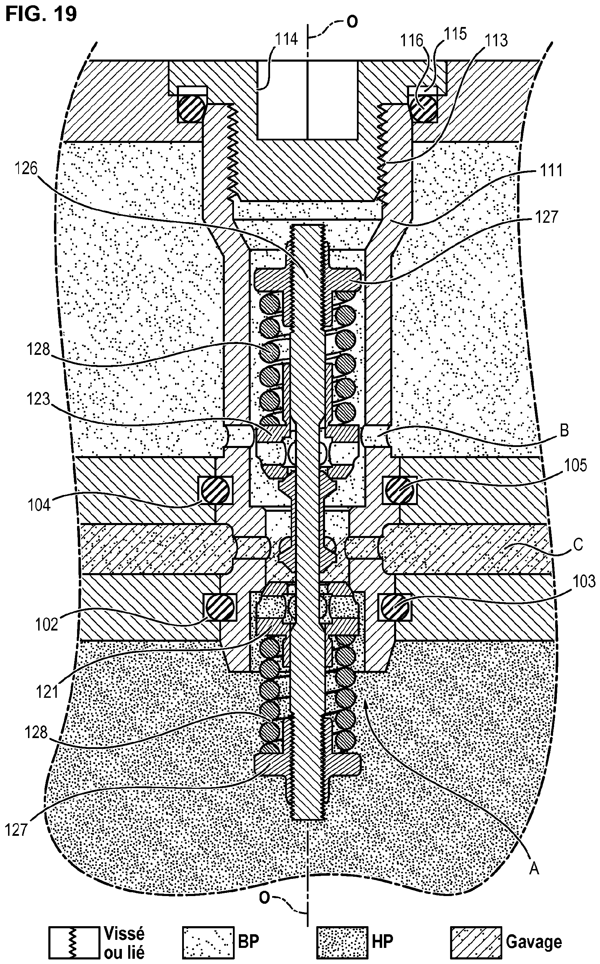

- La figure 19 représente la même quatrième variante de l'invention en cas d'application d'une surpression sur la ligne qui communique avec l'orifice situé en partie inférieure de la figure ?

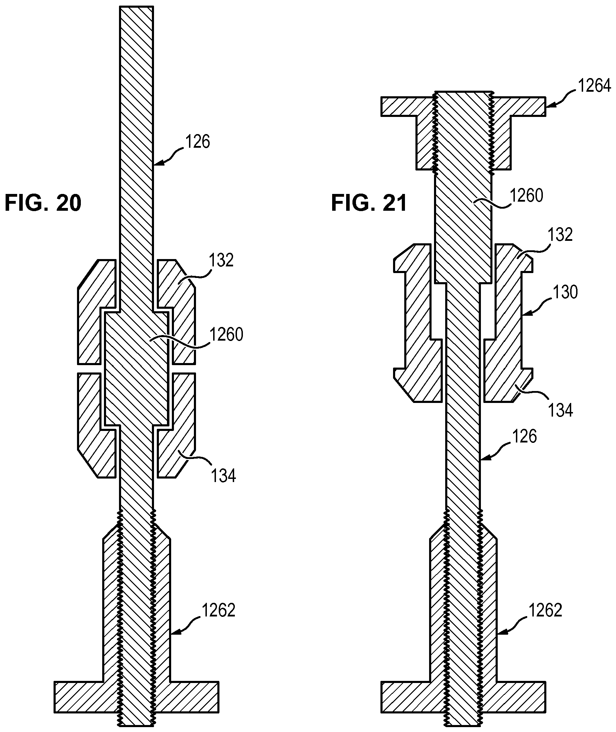

- Les figures 20 et 21 représentent deux variantes de réalisation de moyens d'amortissement du déplacement relatif de moyens obturateurs sur la tige, et

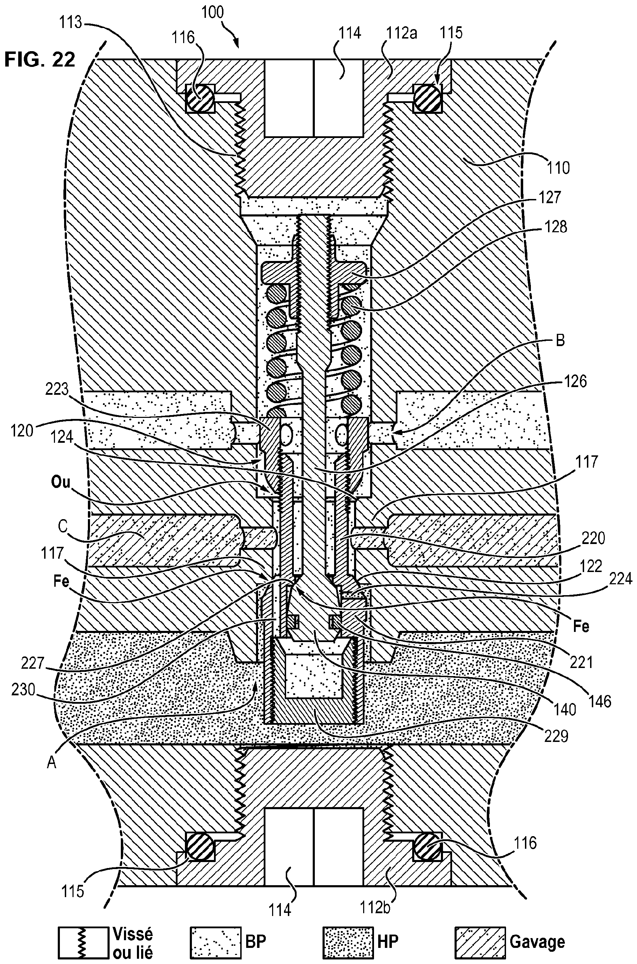

- La figure 22 représente une autre variante de réalisation conforme à la présente invention.

La figure 4 représente un système d'assistance conforme à l'invention intégrant un dispositif de limitation de pression 40 conforme à l'invention qui intègre des moyens qui remplissent la même fonction que les deux clapets anti-retours B11 et B12 et les deux limiteurs 21 et 22 ou 23, 24 ou 25, 26 représentés sur les figures 1 à 3. Le dispositif 40 comprend trois ports 42, 44, 46 : deux ports 42, 44 qui communiquent respectivement avec les lignes 11 et 12 d'alimentation et un port 46 qui communique avec la ligne de gavage 10, 30.
Les structures de quatre variantes de composants 40 conformes à l'invention sont représentées sur les figures 5 et suivantes ainsi que leur fonctionnement et vont maintenant être décrites.

Comme représenté sur les figures 5 à 10, une première variante du dispositif de limitation de pression 40 comprend essentiellement un corps 110, un sélecteur 120 qui forme deux clapets anti-retours, et un élément central 130 formant deux clapets de surpression.

Le dispositif de limitation de pression 40 est centré sur un axe longitudinal de symétrie O-O. Le dispositif de limitation de pression 40 est globalement symétrique de révolution autour de l'axe O-O.

Le corps 110 est formé d'une cartouche adaptée pour être intégrée dans toute structure support, par exemple sur le carter d'un moteur hydraulique.

Le corps 110 est formé de préférence par assemblage d'un carter 111 et d'un bouchon 112. Le bouchon 112 peut être fixé sur une extrémité axiale du carter 111 par tout moyen approprié, par exemple par sertissage ou de préférence par vissage au niveau de filetages complémentaires 113. Le bouchon 112 peut être équipé d'une forme 114 non cylindrique de révolution permettant son serrage, ainsi que d'une gorge 115 adaptée pour recevoir un joint d'étanchéité 116 en contact avec la structure support.

Le carter 111 comprend au moins trois passages traversant A, B, et C qui correspondent respectivement aux trois ports 42, 44, 46 précités.

L'un des passages traversant C est formé en partie médiane sur la longueur du carter 111 et correspond au port 46. Plus précisément, de préférence, il est prévu plusieurs orifices C équi-répartis autour de l'axe O-O, formant ainsi le port 46.

Les passages A et B sont formés respectivement de part et d'autre du passage médian C. Plus précisément, de préférence, le passage B est formé de plusieurs orifices équi-répartis autour de l'axe O-O, formant ainsi le port 44.

Le passage A peut également être formé de plusieurs orifices équi-répartis autour de l'axe O-O, formant ainsi le port 42. Cependant, selon le mode de réalisation préférentiel, pour des raisons de fabrication et d'assemblage, le passage A est formé d'un orifice qui débouche axialement sur le carter 111 à l'extrémité opposée au bouchon 112.

Le carter 110 comprend de préférence sur sa surface extérieure deux gorges annulaires 102, 104, disposées entre les passages A, B et C, destinées à recevoir des joints respectifs 103, 105 en contact avec la structure support et permettant d'isoler entre elles les liaisons hydrauliques assurées vers les passages A, B et C.

Le carter 111 comprend sur sa surface interne et au niveau du passage médian C un rétrécissement 117 qui s'étend axialement de part et d'autre du passage C. Le rétrécissement 117 définit respectivement sur ses deux extrémités axiales deux sièges 122, 124 associés au sélecteur 120. Le rétrécissement 117 qui forme les deux sièges 122, 124 peut être venu de matière sur la surface interne du carter 111 ou être formé d'une pièce séparée rapportée sur la surface du carter 111 et fixée par tout moyen approprié, par exemple par sertissage.

Les deux sièges 122, 124 sont orientés respectivement vers les extrémités axiales du carter 111.

Le sélecteur 120 comprend deux obturateurs 121 et 123, qui sont configurés pour coopérer respectivement avec les sièges 122 et 124 formés dans le carter 111 de manière à former deux clapets anti-retours.

Lorsque l'obturateur 121 est en appui contre le siège 122, le clapet anti-retours correspondant du sélecteur 120 est fermé, la connexion fluidique est coupée entre le passage A et le passage C (entre le port 42 et le port 46) tant que la pression de l'huile reste inférieure à un seuil déterminé.

D'une manière équivalente, lorsque l'obturateur 123 est en appui contre le siège 124, le clapet anti-retours correspondant du sélecteur 120 est fermé, la connexion fluidique est coupée entre le passage B et le passage C (entre le port 44 et le port 46) tant que la pression de l'huile reste inférieure à un certain seuil.

Les portions de surface des obturateurs 121 et 123 destinées à reposer sur les sièges 122 et 124 sont de préférence tronconiques.

Le sélecteur 120 comprend également une tige 126 centrée sur l'axe O-O et sur laquelle les deux obturateurs 121 et 123 sont fixés. Plus précisément, l'obturateur 121 est maintenu fixe sur une première extrémité de la tige 126, par exemple par vissage, et l'obturateur 123 est monté à coulissement sur la tige 126. La tige 126 peut coulisser à l'intérieur du corps 110, la position de la tige 126 à l'intérieur du corps 110 étant fonction de la pression de l'huile qui entre dans ledit corps 110 par les passages A et B.

Afin de pouvoir être fixé à la tige 126, l'obturateur 121 est traversé en son centre par un orifice dirigé selon l'axe O-O lorsque l'obturateur 121 est montée dans le corps 110, lequel orifice reçoit la tige 126. D'une manière équivalente, l'obturateur 123 est également traversé en son centre par un orifice dirigé selon l'axe O-O lorsque ledit obturateur 123 est monté dans le corps 110 et qui reçoit la tige 126. Les obturateurs 121 et 123 comprennent également des orifices radiaux 129 qui sont orientés radialement par rapport à l'axe O-O lorsque les obturateurs 121 et 123 sont placés dans le corps 110. Les orifices radiaux communiquent avec les orifices par lesquels la tige 126 traverse les obturateurs 121 et 123, de sorte que l'huile peut circuler à l'intérieur des obturateurs 121 et 123 en entrant par les orifices radiaux 129 et en sortant par les orifices par lesquels la tige 126 traverse les obturateurs 121 et 123, ou bien en entrant par les orifices par lesquels la tige 126 traverse les obturateurs 121 et 123 et en sortant par les orifices radiaux 129.

Plus précisément encore chaque obturateur 121, 123 à la forme générale d'un champignon dont la tête évasée accueille les orifices radiaux traversant précités 129 et dont le pied a la forme d'un fût cylindrique engagé sur la tige 126. Les deux obturateurs 121 et 123 sont montés tête bêche, leur tête dirigée l'une vers l'autre et vers l'élément central 130 intercalé. Ces deux têtes définissent des sièges respectifs 133 et 134 pour les extrémités de l'élément central 130 en regard, pour former des clapets de surpression comme on le verra par la suite.

Le diamètre des sièges précités 133 et 134 est supérieur au diamètre externe de la tige 126.

Les orifices radiaux 129 permettent d'appliquer la pression provenant des entrées A et B sur les portions de surface d'extrémité de l'élément central 130 circonscrites par les sièges 133 et 134.

Le sélecteur 120 comprend une butée 127 fixée sur une seconde extrémité de la tige 126 (l'extrémité opposée à celle sur laquelle l'obturateur 121 est fixé), ainsi qu'un ressort de tarage 128 qui est en appui sur la butée 127 et sur l'obturateur 123, et qui tend à faire coulisser l'obturateur 123 vers l'obturateur 121.

La butée 127 est de préférence vissée ou sertie ou soudée en position réglable sur la tige 126.

L'élément central 130 qui forme deux clapets de surpression est monté à coulissement sur la tige 126 entre les deux obturateurs 121 et 123. L'élément central 130 comprend une première extrémité 131 et une seconde extrémité 132 qui sont configurées pour que la première extrémité 131 coopère avec l'obturateur 121 de manière à former un premier clapet de surpression, et que la seconde extrémité 132 coopère avec l'obturateur 123 de manière à former un deuxième clapet de surpression. Plus précisément, la première extrémité 131 de l'élément central 130 coopère avec l'obturateur 121 de sorte que le rebord de l'orifice par lequel la tige 126 traverse l'obturateur 121 forme un siège 133 sur lequel la première extrémité 131 de l'élément central 130 peut reposer de manière à empêcher l'huile de passer par l'orifice par lequel la tige 126 traverse l'obturateur 131. D'une manière équivalente, la seconde extrémité 132 de l'élément central 130 coopère avec l'obturateur 123 de sorte que le rebord de l'orifice par lequel la tige 126 traverse l'obturateur 123 forme un siège 134 sur lequel la seconde extrémité 132 de l'élément central 130 peut reposer de manière à empêcher l'huile de passer par l'orifice par lequel la tige 126 traverse l'obturateur 133.

Les portions de surface des extrémités de l'élément central 130 destinées à reposer sur les sièges 133 et 134 sont de préférence tronconiques.

L'élément central 130 a ainsi de préférence la forme d'une bobine ou diabolo comportant un fût cylindrique central muni de deux excroissances respectivement sur ses extrémités, lesquelles excroissances définissent des obturateurs de clapet de surpression qui coopèrent avec les sièges 133 et 134.

On comprend donc que, lorsque la pression de l'huile est inférieure à un seuil prédéterminé, le ressort de tarage 128 pousse l'obturateur 123 en direction de l'obturateur 121, plaquant ainsi la première extrémité 131 et la seconde extrémité 132 de l'élément central 130 sur leur siège respectif 133 et 134. La valeur du seuil prédéterminé de la pression de l'huile à partir de laquelle le ressort de tarage 128 ne parvient plus à plaquer la première extrémité 131 et la seconde extrémité 132 de l'élément central 130 sur leur siège respectif 133 et 134 peut être réglée en faisant varier la longueur ou la raideur du ressort de tarage 128, ou bien la position de la butée 127 sur la tige 126.

On comprend donc que la tige 126 travaille à la traction sous la sollicitation du ressort de tarage 128 qui pousse d'une part la butée 127, et d'autre part l'obturateur 121 (via l'obturateur 123 et l'élément central 130).

Par ailleurs, l'élément central 130 a une longueur qui est supérieure à la longueur du rétrécissement 117 (plus précisément une longueur telle que la distance séparant les surfaces des obturateurs qui coopèrent avec les sièges 122 et 124 soit supérieure à la distance séparant ces sièges 122 et 124), de sorte que les obturateurs 121 et 123 ne peuvent pas être appuyés sur leur siège respectif 122 et 124 simultanément, seul un des obturateurs 121 ou 123 pouvant être en appui sur son siège 122 ou 124 à un instant donné.

L'élément central 130 illustré sur les figures 5 à 10 est formé d'un corps monobloc. En variante l'élément central 130 peut être formé de plusieurs éléments séparés juxtaposés axialement.

En synthèse le premier mode de réalisation représenté sur les figures 5 à 9 comprend un corps 110, par exemple un corps de cartouche,comprenant trois entrées A, B et C destinées à être reliées respectivement à deux lignes d'alimentation et à une ligne de gavage, lequel corps de cartouche possède un rétrécissement 117 définissant deux sièges de sélecteur 122, 124, un sélecteur 120 comprenant une tige rigide 126 et deux obturateurs 121, 123, l'un 121 des obturateurs étant relié rigidement à une première extrémité de la tige 126, et le deuxième obturateur 123 étant monté à coulissement sur la tige 126, une butée 127 réglable sur la seconde extrémité de la tige 126 et un ressort 128 intercalé entre la butée réglable 127 et le deuxième obturateur 123, chacun des deux obturateurs 121, 123 de sélecteur définissant un siège de clapet de surpression133, 134, et des moyens formant double clapet de surpression comprenant un corps en forme de diabolo 130 monté à coulissement sur la tige 126 et définissant deux obturateurs 131, 132 placés en regard des sièges de clapet de surpression 133, 134.

Nous allons maintenant décrire le fonctionnement du dispositif de limitation de pression 40 lors des différentes phases possibles d'utilisation de la machine hydraulique dans laquelle est disposée ledit dispositif de limitation de pression 40.

La figure 5 représente une phase d'utilisation dans laquelle la première ligne 11 est à la haute pression (haute pression au passage A), et la seconde ligne 12 est à la basse pression (basse pression au passage B). Ainsi, la pression de l'huile qui entre dans le corps 110 par le passage A étant supérieure à la pression de l'huile appliquée au corps 110 par le passage B, l'obturateur 121 est poussé par la pression de l'huile sur son siège 122 (fermant ainsi le clapet anti-retours associé), tandis que l'obturateur 123 est éloigné de son siège 124 (ouvrant ainsi le clapet anti-retours associé).

L'huile qui sort de la ligne de gavage 10, 30 et qui entre dans le corps 110 par le passage C peut donc pénétrer dans la seconde ligne 12 (ligne basse pression) en passant par le clapet de sélection qui est ouvert, tandis que l'huile qui sort de la première ligne 11 et qui rentre dans le corps 110 par le passage A est bloquée par le clapet anti-retours 121/122 qui est fermé.

La pression de l'huile ne dépassant pas le seuil prédéterminé fixé par le ressort de tarage 128, les clapets de surpression sont fermés (la première extrémité 131 de l'élément central 130 est en appui sur son siège 133, et la seconde extrémité 132 de l'élément central 130 est également en appui sur son siège 134).

La figure 7 représente une phase d'utilisation qui est l'inverse de la phase représentée sur la figure 5, la première ligne 11 étant à la basse pression (basse pression au passage A), tandis que la seconde ligne 12 est à la haute pression (haute pression au passage B). Ainsi, la pression de l'huile qui entre dans le corps 110 par le passage B étant supérieure à la pression de l'huile appliquée au passage A, l'obturateur 123 est poussé sur son siège 124 par la pression de l'huile (fermant ainsi le clapet anti-retours associé), tandis que l'obturateur 121 est éloigné de son siège 122 (ouvrant ainsi le clapet anti-retours associé). L'huile qui sort de la ligne de gavage 10, 30 et qui entre dans le corps 110 par le passage C peut donc pénétrer dans la première ligne 11 (ligne basse pression) en passant par le clapet de sélection qui est ouvert, tandis que l'huile qui sort de la seconde ligne 12 et qui rentre dans le corps 110 par le passage B est bloquée par le clapet anti-retours qui est fermé.

La pression de l'huile ne dépassant pas le seuil prédéterminé fixé par le ressort de tarage 128, les clapets de surpression sont fermés (la première extrémité 131 de l'élément central 130 est en appui sur son siège 133, et la seconde extrémité 132 de l'élément central 130 est également en appui sur son siège 134).

La figure 8 représente une phase d'utilisation dans laquelle la première ligne 11 est en surpression (surpression au passage A), et la seconde ligne 12 est en basse pression (basse pression au passage B). Ainsi, la pression de l'huile qui entre dans le corps 110 par le passage A étant supérieure à la pression de l'huile appliquée au passage B, l'obturateur 121 est poussé sur son siège 122 par la pression de l'huile (fermant ainsi le clapet anti-retours associé), tandis que l'obturateur 123 est éloigné de son siège 124 (ouvrant ainsi le clapet anti-retours associé).

Cependant, la pression de l'huile dépassant le seuil prédéterminé fixé par le ressort de tarage 128 (surpression), un clapet de surpression s'ouvre. Plus précisément, l'huile en surpression appuie sur la première extrémité 131 et force le ressort de tarage 128 à se comprimer, faisant ainsi se décoller la première extrémité 131 de son siège 133 (ouvrant ainsi le clapet de surpression). Ainsi, l'huile en surpression peut s'évacuer dans la seconde ligne 12 et la ligne de gavage 10, 30 afin d'empêcher une montée en pression trop importante de l'huile dans la première ligne 11 et une dégradation de la machine hydraulique.

La figure 9 représente une phase d'utilisation qui est l'inverse de la phase représentée sur la figure 8, la seconde ligne 12 étant en surpression (surpression au passage B), et la première ligne 11 est en basse pression (basse pression au passage A). Ainsi, la pression de l'huile qui entre dans le corps 110 par le passage B étant supérieure à la pression de l'huile appliquée au passage A, l'obturateur 123 est poussé sur son siège 124 par la pression de l'huile (fermant ainsi le clapet anti-retours associé), tandis que l'obturateur 121 est éloigné de son siège 122 (ouvrant ainsi le clapet anti-retours associé).

Cependant, la pression de l'huile dépassant le seuil prédéterminé fixé par le ressort de tarage 128 (surpression), un clapet de surpression s'ouvre. Plus précisément, l'huile en surpression appuie sur la seconde extrémité 132 et force le ressort de tarage 128 à se comprimer, faisant ainsi se décoller la seconde extrémité 132 de son siège 134 (ouvrant ainsi le clapet de surpression). Ainsi, l'huile en surpression peut s'évacuer dans la première ligne 11 et la ligne de gavage 10, 30 afin d'empêcher une montée en pression trop importante de l'huile dans la seconde ligne 12 et une dégradation de la machine hydraulique.

Selon une adaptation possible de la première variante de l'invention illustrée sur les figures 5 à 9, comme illustré sur les figures 10 et 10 bis l'élément central 130 comprend un moyen d'amortissement. En effet, l'arrivée d'une surpression dans une ligne du circuit de la machine hydraulique est un évènement brutal, et les pressions utilisées étant importantes (de l'ordre de 400 bars), l'ouverture d'un clapet de surpression peut être brutale et entrainer une usure prématurée du dispositif de limitation de pression 40. Le moyen d'amortissement permet également de limiter les oscillations du ressort de tarage 128. Afin d'amortir le déplacement de l'élément central 130 le long de la tige 126 lors d'une surpression, une cavité d'amortissement annulaire 136 est créée entre la tige 126 et l'élément central 130, la taille de la cavité d'amortissement 136 étant fonction de la position de l'élément central 130 sur la tige 126. De plus, la cavité centrale 136 communique fluidiquement avec l'intérieur du carter 111 par un canal d'amortissement 139 annulaire dont la différence entre le diamètre externe et le diamètre interne est inférieure à la différence entre le diamètre externe et le diamètre interne de la cavité d'amortissement. Par la suite, on appellera « la différence entre le diamètre externe et le diamètre interne » de la cavité d'amortissement ou du canal d'amortissement, « l'épaisseur radiale » de la cavité d'amortissement ou du canal d'amortissement.

Comme représenté sur la figure 10, la cavité d'amortissement 136 est formée par une différence de diamètre entre le diamètre de la tige 126 et le diamètre du perçage de l'élément central 130 dans lequel coulisse la tige 126. Cette différence de diamètre est créée par un épaulement 137 réalisé sur la tige 126, de manière qu'une partie de la tige 126 située après l'épaulement 137 a un diamètre supérieur à la partie de la tige 126 située avant l'épaulement 137. Un épaulement 138 complémentaire à l'épaulement 137 réalisé sur la tige 126, est réalisé dans le perçage de l'élément central 130. Ainsi, une partie du perçage de l'élément central 130 située après l'épaulement 138 a un diamètre supérieur à la partie du perçage de l'élément central 130 située avant l'épaulement 138.

La cavité d'amortissement 136 est créée par le volume défini le long de la tige 126 entre l'épaulement 138 formé dans le perçage de l'élément central 130 et l'épaulement 137 formé sur la tige 126 et délimité par ailleurs par la surface externe de la tige 126 et la surface interne de l'élément central 130.

Le canal d'amortissement 139 est formé par l'espace annulaire défini entre l'élément central 130 et la tige 126, sur l'extérieur de la cavité 136. Plus précisément, le canal d'amortissement 139 est formé par le fait que le perçage de l'élément central 130 a un diamètre interne supérieur au diamètre externe de la tige 126, notamment pour permettre à l'élément central 130 de coulisser sur la tige 126.

Ainsi, la position de l'élément central 130 sur la tige 126 est telle que, lorsqu'aucune surpression ne survient, l'épaulement 137 de la tige 126 et l'épaulement 138 du perçage de l'élément central 130 sont décalés, formant ainsi la cavité d'amortissement 136.

La cavité d'amortissement 136 est remplie d'huile, ladite cavité d'amortissement 136 étant reliée fluidiquement à l'intérieur du corps 110 par le canal d'amortissement 139.

Quand une surpression se produit sur l'entrée A, l'élément central 130 glisse le long de la tige 126 en éloignement de l'obturateur 121, diminuant la longueur de la cavité d'amortissement 136 en rapprochant les deux épaulements 137 et 138. La cavité d'amortissement 136 est comprimée, et donc sa longueur tend à diminuer à cause du déplacement de l'élément central 130 le long de la tige 126. Le déplacement de l'élément central 130 est amorti par l'expulsion de l'huile située à l'intérieur de la cavité d'amortissement 136 par le canal d'amortissement 139.

Puis lorsque la surpression a disparu, la cavité d'amortissement est réétirée, et donc sa longueur tend à augmenter à cause du déplacement de l'élément central 130 le long de la tige 126, le déplacement de l'élément central 130 étant à nouveau amorti par l'aspiration dans la cavité d'amortissement d'huile située dans le corps 110 au travers du canal d'amortissement 139.

En effet, l'épaisseur radiale du canal d'amortissement 139 étant inférieure à l'épaisseur radiale de la cavité d'amortissement 136, la circulation d'huile à l'intérieur du canal d'échappement 139 amorti le déplacement de l'élément central 130.

L'on observera par ailleurs que les décrochements 137 et 138 précités permettent de définir des diamètres différents sur les deux extrémités de l'élément central 130, pour la tige 126 et l'élément central 130, et par conséquent des amplitudes différentes de surface soumises respectivement aux pressions provenant des entrées A et B. Cette disposition permet d'adapter des seuils d'ouverture différents pour les deux clapets de surpression, malgré la présence d'un seul ressort de sollicitation 128.

Selon le mode de réalisation illustré sur la figure 10, le corps de cartouche est formé de deux pièces complémentaires assemblées et maintenues entre elles grâce à un anneau d'expansion 1000 rendant l'ensemble indémontable.

D'autres variantes de moyens d'amortissement seront décrits par la suite en regard des figures 20 et21.

On va maintenant décrire le deuxième mode de réalisation conforme à la présente invention représenté sur les figures 11 à 14 annexées. Comme représenté sur les figures 11 à 14, une deuxième variante du dispositif de limitation de pression 40 comprend essentiellement un corps 110 qui loge un sélecteur 120 qui forme deux clapets anti-retours, et une tige 126 qui comprend un obturateur 140 formant deux clapets de surpression.

Le corps 110 de la deuxième variante du dispositif de limitation de pression 40 est similaire au corps 110 de la première variante.

Le dispositif est centré sur un axe longitudinal de symétrie O-O. Le dispositif est globalement symétrique de révolution autour de l'axe O-O.

Les figures 11 à 14 représentent une cartouche 110 conforme à l'invention intégrant un dispositif de limitation de pression conforme à l'invention qui intègre des moyens qui remplissent la fonction d'un sélecteur de pression 120 et deux limiteurs de pression regroupés dans un ensemble commun 140.

Le dispositif comprend un corps 110 qui possède trois ports A, B et C : deux ports A, B qui communiquent respectivement avec les lignes 11 et 12 et un port C qui communique avec la ligne de gavage 10.

La ligne de gavage 10 peut être alimentée en huile par la pompe de gavage P jusqu'à atteindre la pression de gavage, qui rend les machines M1, M2 opérationnelles, ou bien la ligne de gavage 10 peut être aspirée par la pompe de gavage, ce qui rend les machines M1 M2 non opérationnelles. Les machines M1 et M2 sont d'un type qui devient non opérationnel ou débrayable, en dessous d'un seuil de pression dans les lignes 11 et 12. Le sélecteur raccorde automatiquement la ligne à plus basse pression au gavage, ce qui permet une mise en fonction, ou une mise hors fonction de la transmission, qui sont souples et ordonnées.

Le corps 110 est formé d'une cartouche adaptée pour être intégrée dans toute structure support, par exemple sur le carter d'un moteur hydraulique.

Le corps 110 est formé de préférence par assemblage d'un carter 111 et d'un bouchon 112. Le bouchon 112 peut être fixé sur une extrémité axiale du carter 111 par tout moyen approprié, par exemple par sertissage ou de préférence par vissage au niveau de filetages complémentaires 114. Le bouchon 112 peut être équipé d'une forme 113 non cylindrique de révolution permettant son serrage, ainsi que d'une gorge 115 adaptée pour recevoir un joint d'étanchéité 116 en contact avec la structure support. L'extrémité axiale du carter 111 peut être munie sur sa surface extérieure d'un filetage 1210 permettant l'assemblage du dispositif 100 sur cette structure support.

L'un des passages traversant C est formé en partie médiane sur la longueur du carter 111. Plus précisément, de préférence, il est prévu plusieurs orifices C équi-répartis autour de l'axe O-O.

Les passages A et B sont formés respectivement de part et d'autre du passage médian C. Plus précisément de préférence, le passage B est formé de plusieurs orifices équi-répartis autour de l'axe O-O.

Le passage A peut également être formé de plusieurs orifices équi-répartis autour de l'axe O-O. Cependant, selon le mode de réalisation préférentiel, pour des raisons de fabrication et d'assemblage, le passage A est formé d'un orifice qui débouche axialement sur le carter 111 à l'extrémité opposée au bouchon 112.

Le carter 111 comprend de préférence sur sa surface extérieure deux gorges annulaires 102, 104, disposées entre les passages A, B et C, destinées à recevoir des joints respectifs 103, 105 en contact avec la structure support et permettant d'isoler entre elles les liaisons hydrauliques assurées vers les passages A, B et C.
De manière identique à la première variante, le carter 111 comprend sur sa surface interne et au niveau du passage médian C, le rétrécissement 117 qui s'étend axialement de part et d'autre du passage C. Le rétrécissement 117 définit respectivement sur ses deux extrémités axiales, les deux sièges 122 et 124 associés au sélecteur 120.
Le rétrécissement 117 qui forme les deux sièges 122, 124 peut être venu de matière sur la surface interne du carter 111 ou être formé d'une pièce séparée rapportée sur la surface du carter 111 et fixée par tout moyen approprié, par exemple par vissage, sertissage ou soudure.
Les deux sièges 122, 124 sont orientés respectivement vers les extrémités axiales opposées du carter 111.

Le sélecteur 120 qui a la forme générale d'un diabolo formé d'un cylindre central 220 de section transversale cylindrique de révolution constante pourvu sur ses deux extrémités axiales d'excroissances respectives en saillie sur sa surface externe. Ces deux excroissances ou saillies forment respectivement deux obturateurs annulaires 221 et 223 dirigés respectivement vers la partie médiane du diabolo formant sélecteur 120, adaptés pour coopérer avec les sièges 122, 124 formés sur le carter 111.
Le diamètre extérieur du cylindre central 220 est inférieur au diamètre interne du rétrécissement 117. Le diamètre extérieur des obturateurs 221, 223 en revanche est supérieur au diamètre des sièges 122, 124. Les obturateurs 221, 223 sont configurés pour coopérer respectivement avec les sièges 122 et 124. Plus précisément, lorsque l'un des obturateurs 221, 223 repose sur le siège associé 122, 124, le clapet correspondant du sélecteur 120 est fermé. Inversement, lorsque un obturateur 221, 223 est séparé du siège associé 122, 124, le clapet correspondant du sélecteur 120 est ouvert.
Le sélecteur 120 est mobile en translation à l'intérieur du carter 111, les obturateurs 221, 223 et leurs sièges associés 122, 124 forment des butées pour le sélecteur 120 dans son déplacement à l'intérieur du carter 111.
La longueur du cylindre central 220 est supérieure à la longueur du rétrécissement 117 (la distance entre les sièges 122 et 124). Ainsi, lorsque l'un des clapets de sélection est fermé, l'autre clapet de sélection est automatiquement ouvert.

L'utilisation d'un sélecteur 120 comprenant une cage 220 sur les extrémités de laquelle sont formés les obturateurs respectifs 221, 223 de deux clapets de sélection, permet de garantir une distance constante entre ces deux obturateurs 221, 223 et par conséquent permet de garantir que lorsque l'un des clapets de sélection est fermé, l'autre clapet de sélection est automatiquement ouvert.

Le cylindre central 220 définit un passage axial traversant destiné à recevoir à coulissement un obturateur 140 et une tige support associée 162 formant deux clapets de surpression. Le cylindre central 220 comprend également une pluralité d'orifices traversant radialement 225. Les orifices 225 permettent un libre remplissage du volume interne du sélecteur 120 et l'évacuation du fluide lors de l'ouverture d'un clapet de surpression, comme on le verra par la suite.
Le cylindre central 220 et les deux obturateurs 221, 223 peuvent être formés d'une pièce unique venue de matière. Comme illustré sur les figures 11 à 14, l'un au moins des obturateurs 221, 223 peut cependant être formée d'une pièce rapportée et fixée sur le cylindre central 220 pour faciliter la réalisation et l'assemblage du dispositif.
Comme on le voit sur les figures 11 à 14, il est prévu sur une extrémité du cylindre central 220 et sur la surface interne de celui-ci, une saillie annulaire qui sert de siège 227 à l'obturateur 140.
L'obturateur 140 est formé d'une excroissance sur une extrémité de la tige 126. L'obturateur 140 est placé en regard du siège 227, dans le volume de la chambre interne du cylindre central 220.

Pour permettre l'assemblage de l'obturateur évasé 140 sur le siège 227, le cylindre central 220 comporte de préférence un bouchon d'extrémité 229 vissé sur l'extrémité du cylindre central 220 après mise en place de l'obturateur 140.
La tige 126 émerge axialement sur l'extrémité du sélecteur 120 opposée à l'obturateur 140. La tige 126 et son obturateur 140 associé sont sollicités en traction vers une extrémité axiale du carter 111 par un ressort de tarage 128.
Ainsi, l'obturateur 140 est sollicité en appui contre le siège 227.
Le ressort 128 est intercalé sur la tige 126, entre l'obturateur 223 et une butée 127 en forme de bague portée par la tige 126.
De préférence, la butée 127 est réglable en position sur la longueur de la tige 126 pour définir l'effort exercé par le ressort de tarage 128 et par conséquent le seuil de pression de l'huile nécessaire pour l'ouverture du clapet de surpression.
La butée 127 peut être fixée en position sur la tige 126 par tout moyen approprié, par exemple par vissage ou sertissage.
Comme indiqué précédemment les obturateurs 221, 223 et le cylindre central 220 sont avantageusement formés d'au moins deux pièces, de préférence de trois pièces, initialement séparées et assemblées par tout moyen approprié, par exemple par vissage ou sertissage, comme on le voit sur les figures 11 à 14. Selon les figures 11 à 14, l'obturateur 223 est formé d'un élément initialement séparé du cylindre central 220, mais adapté pour être rapporté et fixé sur celui-ci par tous moyens appropriés, par exemple par vissage.
Plus précisément encore, le cylindre principal 220 de sélecteur comporte des passages traversant radialement 224 formés sur son extrémité axiale à l'extérieur du siège 227, entre le siège 227 et un segment d'étanchéité 146 porté par l'obturateur 140.
Plus précisément encore le corps de sélecteur 220 comporte des passages traversant radialement 224 formés sur son extrémité axiale à l'extérieur du siège 227, entre le siège 227 et un segment d'étanchéité 146 porté par l'obturateur 140.

Par ailleurs l'extrémité axiale de l'obturateur 140 dirigée vers le siège 227 est de préférence en forme de tronc de cône 141. Plus précisément la surface en tronc de cône 141 comprend de préférence deux parties juxtaposées axialement 142 et 143 présentant des conicités différentes. La partie 142 de cette surface en tronc de cône 141 repose sur le siège 227.
La partie 142 de cette surface tronconique 141 qui est accessible sur l'intérieur de la chambre interne du sélecteur 120 est soumise à la pression venant du passage B. C'est cette partie 142 de surface tronconique 141 qui définit l'effort résultant de la pression du passage B permettant de vaincre l'effort du ressort de tarage 128 et donc d'ouvrir le clapet de surpression en cas de pression excessive sur le passage B. En revanche la partie 143 de la surface tronconique 141 qui est disposée sur l'extérieur du siège 227 est soumise à la pression venant du passage A via les passages traversant précités 224. C'est cette partie 143 de surface tronconique 141 qui définit l'effort résultant de la pression du passage A permettant de vaincre l'effort du ressort 128 et donc d'ouvrir le clapet de surpression en cas de pression excessive sur le passage A. Comme on le voit sur les figures 11 à 14, la conicité des deux parties élémentaires 142 et 143 de la surface 141 peut être différente pour adapter les seuils d'ouverture du clapet sous l'effet des pressions respectivement du passage B et du passage A.
Par ailleurs la partie évasée de l'obturateur 140 est guidée à translation selon l'axe 0-0 du dispositif dans une partie complémentaire du corps et possède à ce niveau un joint ou segment annulaire d'étanchéité 146. L'étanchéité est assurée par la coopération entre la surface 142 et le siège 127 d'une part et entre le segment 146 et la surface cylindrique complémentaire qui l'entoure d'autre part.
Comme on le voit à l'examen des figures 11 à 14, l'obturateur 140 possède deux surfaces situées de part et d'autre du siège associé 227 formé sur le cylindre 220 et soumises respectivement aux pressions venant des deux lignes d'alimentation A et B.

Par ailleurs le dispositif comprend des moyens de confinement adaptés pour appliquer la pression du port A sur une zone localisée limitée de l'obturateur 140. Plus précisément ces moyens de confinement sont formés par le joint ou segment annulaire d'étanchéité 146 et par les canaux 224. Ainsi la pression qui règne dans la ligne d'alimentation associée au port A ne s'applique qu'à la face de l'obturateur 140 située à l'extérieur du siège 227, plus précisément à la surface délimitée entre le siège 227 et le segment 146.
Pour permettre un libre déplacement de l'obturateur 140 dans le logement formé par le bouchon 229 rapporté sur l'extrémité du cylindre 220, il est de préférence prévu des canaux longitudinaux 230 qui forment canal de purge et relient ce logement interne du sélecteur au port C.
Le canal de purge 230 permet le mouvement de l'obturateur 140, et a une fonction d'amortissement si la section du canal 230 est réduite.

Pour assembler le dispositif de limitation de pression 40 précédemment décrit, on procède essentiellement comme suit.
Dans un premier temps, l'on assemble l'obturateur 140 et sa tige 126 équipés du ressort de tarage 128 et de la butée 127, sur le cylindre central 220 du sélecteur 120 dépourvu de l'obturateur 223, l'obturateur 140 étant placé en regard du siège 227. La butée 127 est réglée en position pour le tarage recherché. Le bouchon obturateur 229 est fixé sur le cylindre central 220.
Le sous-ensemble de clapet de surpression et sélecteur ainsi formé ainsi formé est introduit dans le carter 11, par une extrémité de celui-ci, de préférence celle opposée au bouchon 112. L'obturateur 223 est fixé sur le cylindre central 220 du sélecteur 120.
A cette fin, la surface extérieure du cylindre central 220 du sélecteur 120 peut être munie de formes de préhension accessibles par les passages C pour faciliter l'assemblage.
Puis, le bouchon 112 est fixé sur l'extrémité du carter 111. Les joints d'étanchéité 116 sont placés dans leurs gorges 115 respectives.

Le dispositif illustré sur les figures 11 à 14 comprend en outre au moins deux guidages en translation de l'obturateur 140, séparés selon la direction longitudinale de translation O-O de celui-ci, d'une distance égale à au moins une fois le diamètre de l'obturateur 140 reposant sur le siège 227 associé, de préférence une distance égale à au moins deux fois ce diamètre et très avantageusement, comme illustré sur les figures 11 à 14 égale à au moins cinq fois ce diamètre.
Plus précisément encore comme illustré sur les figures 11 à 14, le dispositif comprend un premier guidage en translation de l'obturateur 140 formé par la coopération définie entre l'extrémité conique 142 de l'obturateur 140 et son siège associé 227 et au moins un deuxième guidage formé par la deuxième extrémité de la tige d'obturateur 126 guidée sur le corps au niveau de la collerette précitée 127 définissant l'appui du ressort 128. Ces deux guidages sont séparés typiquement d'une distance au moins égale à 5 fois le diamètre du siège 227.

Comme on le voit sur les figures 11 à 14, le dispositif comprend en outre un troisième guidage à translation de l'obturateur formé par la partie évasée 140 munie du joint ou segment 146 qui se déplace dans un canal de diamètre complémentaire formé sur le corps 220 de sélecteur.

Un tel guidage multiple permet d'obtenir une bonne fiabilité du dispositif, sans pour autant pénaliser l'encombrement longitudinal cumulé des deux obturateurs du fait que selon les figures 11 à 14 les deux clapets de surpression sont regroupés sur des moyens communs.

L'on comprend que la tige 126 associée à l'obturateur 140 travaille à la traction sous la sollicitation du ressort 128.

Le fonctionnement du dispositif de limitation est essentiellement le suivant :
Au repos, en absence de pression sur le port C et donc dans la ligne de gavage 10, 30 et par conséquent sur les ports A, B et donc dans les lignes d'alimentation 11, 12, le sélecteur 120 est susceptible de libre déplacement dans le carter 111 en regard des sièges 122, 124.
L'obturateur 140 est plaqué sur le siège 227 par le ressort 128, le clapet de surpression étant par conséquent fermé. La tige 126 est sollicité en traction par le ressort de tarage 128.
En fonctionnement, lors de l'activation de la pompe de gavage et d'un choix de sens de rotation de la machine M1, l'un des ports A ou B est soumis à une haute pression tandis que l'autre port A ou B est soumis à une basse pression de retour.
Le sélecteur 120 est ainsi sollicité par la haute pression.
Si comme illustré sur la figure 12, la haute pression est appliquée au port A, l'obturateur 221 du sélecteur 120 est plaqué contre le siège 122. Le clapet de sélection correspondant est donc fermé. Inversement, une basse pression est appliquée au port B. L'obturateur 223 du sélecteur 120 est séparé du siège 124. Le clapet de sélection correspondant est donc ouvert.
Comme on le voit sur la figure 14, en cas d'inversion du sens de rotation, la haute pression est appliquée au port B. L'obturateur 223 du sélecteur 120 est plaqué contre le siège 124. Le clapet de sélection correspondant est donc fermé. Inversement, une basse pression est appliquée au port A. L'obturateur 221 du sélecteur 120 est séparé du siège 122. Le clapet de sélection correspondant est donc ouvert.
Le fonctionnement du sélecteur 120 est identique au moment de la mise en service ou de la mise hors service des machines hydrauliques, par l'utilisation de la pompe de gavage, dans le sens de faire entrer de l'huile dans la boucle fermée, ou de faire sortir de l'huile de la boucle fermée.
Lorsque la pression dans une ligne 11, 12 dépasse le seuil de tarage des clapets de surpression définis par le ressort 128, cette surpression appliquée à l'obturateur 140 assure l'ouverture d'un des clapets de surpression, comme illustré sur les figures 13 et 14 par la séparation de l'obturateurs 140 vis-à-vis du siège 227. La surpression correspondante est alors évacuée vers la ligne de gavage 10 ainsi que vers l'autre ligne d'alimentation.

L'ouverture du clapet de surpression représentée sur la figure 13 est due à une surpression provenant de la ligne A et appliquée à la surface 142 située à l'extérieur du siège 227 via les passages 224. Celle représentée sur la figure 14 est due à une surpression provenant de la ligne B et appliquée à la surface 142 située à l'intérieur du siège 227.

En synthèse le deuxième mode de réalisation représenté sur les figures 11 à 14 comprend un corps 110, par exemple un corps de cartouche comprenant trois entrées A, B et C destinées à être reliées respectivement à deux lignes d'alimentation et à une ligne de gavage, lequel corps de cartouche possède un rétrécissement 117 définissant deux sièges de sélecteur 122, 124, un sélecteur 120 en forme de cage comprenant deux évasements sur ses extrémités formant deux obturateurs en regard des sièges de sélecteur et possédant un siège interne de clapet de surpression, et des moyens formant double clapet de surpression comprenant une tige rigide 126 et un obturateur relié rigidement à une première extrémité de la tige 126 en regard du siège de clapet de surpression, l'obturateur du clapet de surpression comprenant deux surfaces de sollicitation placées respectivement de part et d'autre du siège de clapet de surpression et exposées respectivement aux pression appliquées aux deux entrées destinées à être reliées aux lignes d'alimentation et un ressort monté entre une butée 127 réglable sur la seconde extrémité de la tige 126 et le sélecteur.

On va maintenant décrire le troisième mode de réalisation conforme à la présente invention représenté sur les figures 15 et 16 annexées.

Le troisième mode de réalisation illustré sur les figures 15 et 16 comprend essentiellement un corps 110, par exemple un corps de cartouche comprenant trois entrées A, B et C destinées à être reliées respectivement à deux lignes d'alimentation et à une ligne de gavage, lequel corps de cartouche possède un rétrécissement 117 définissant deux sièges de sélecteur 122, 124, un sélecteur 120 comprenant une tige rigide 126 et deux obturateurs 121, 123, reliés rigidement à des extrémités respectives de la tige 126, la position de l'un au moins de ces deux obturateurs 121, 123 étant de préférence réglable sur la tige 126, chacun des deux obturateurs 121, 123 de sélecteur définissant un siège de clapet de surpression 133, 134, deux clapets de surpression comprenant deux obturateurs séparés 131, 132 montés à coulissement sur la tige entre les obturateurs de sélecteur et un ressort 128 intercalé entre les deux obturateurs 131, 132 de clapets de surpression.

On retrouve dans ce troisième mode de réalisation représenté sur les figures 15 et 16 annexées :
- un dispositif de limitation de pression 40 centré sur un axe longitudinal de symétrie O-O et globalement symétrique de révolution autour de l'axe O-O.
- un corps 110 formé d'une cartouche adaptée pour être intégrée dans toute structure support, par exemple sur le carter d'un moteur hydraulique.
- le corps 110 est de préférence similaire au corps 110 de la première variante,
- le corps 110 étant formé de préférence par assemblage d'un carter 111 et d'un bouchon 112. Le bouchon 112 peut être fixé sur une extrémité axiale du carter 111 par tout moyen approprié, par exemple par sertissage ou de préférence par vissage au niveau de filetages complémentaires 113. Le bouchon 112 peut être équipé d'une forme 114 non cylindrique de révolution permettant son serrage, ainsi que d'une gorge 115 adaptée pour recevoir un joint d'étanchéité 116 en contact avec la structure support.
- le carter 111 comprend au moins trois passages traversant A, B, et C qui correspondent respectivement aux trois ports 42, 44, 46 précités. L'un des passages traversant C est formé en partie médiane sur la longueur du carter 111 et correspond au port 46. Plus précisément, de préférence, il est prévu plusieurs orifices C équi-répartis autour de l'axe O-O, formant ainsi le port 46. Les passages A et B sont formés respectivement de part et d'autre du passage médian C. Plus précisément, de préférence, le passage B est formé de plusieurs orifices équi-répartis autour de l'axe O-O, formant ainsi le port 44. Le passage A peut également être formé de plusieurs orifices équi-répartis autour de l'axe O-O, formant ainsi le port 42. Cependant, selon le mode de réalisation préférentiel, pour des raisons de fabrication et d'assemblage, le passage A est formé d'un orifice qui débouche axialement sur le carter 111 à l'extrémité opposée au bouchon 112.
- deux gorges annulaires 102, 104, formées sur le carter 110, disposées entre les passages A, B et C, destinées à recevoir des joints respectifs 103, 105 en contact avec la structure support et permettant d'isoler entre elles les liaisons hydrauliques assurées vers les passages A, B et C.
- un rétrécissement 117 formé sur la surface interne du carter 111 au niveau du passage médian C et qui s'étend axialement de part et d'autre du passage C. Le rétrécissement 117 définit respectivement sur ses deux extrémités axiales deux sièges 122, 124 associés au sélecteur 120. Le rétrécissement 117 qui forme les deux sièges 122, 124 peut être venu de matière sur la surface interne du carter 111 ou être formé d'une pièce séparée rapportée sur la surface du carter 111 et fixée par tout moyen approprié, par exemple par sertissage. Les deux sièges 122, 124 sont orientés respectivement vers les extrémités axiales du carter 111.

Le sélecteur 120 comprend deux obturateurs 121 et 123, qui sont configurés pour coopérer respectivement avec les sièges 122 et 124 formés dans le carter 111 de manière à former deux clapets anti-retours.

Lorsque l'obturateur 121 est en appui contre le siège 122, le clapet anti-retours correspondant du sélecteur 120 est fermé, la connexion fluidique est coupée entre le passage A et le passage C (entre le port 42 et le port 46) tant que la pression de l'huile reste inférieure à un seuil déterminé.

D'une manière équivalente, lorsque l'obturateur 123 est en appui contre le siège 124, le clapet anti-retours correspondant du sélecteur 120 est fermé, la connexion fluidique est coupée entre le passage B et le passage C (entre le port 44 et le port 46) tant que la pression de l'huile reste inférieure à un certain seuil.

Les portions de surface des obturateurs 121 et 123 destinées à reposer sur les sièges 122 et 124 sont de préférence tronconiques.

Le sélecteur 120 comprend également une tige 126 centrée sur l'axe O-O. Les deux obturateurs 121 et 123 sont fixés respectivement sur les extrémités de la tige 126, par exemple par vissage ou tout moyen équivalent. Plus précisément, de préférence l'un au moins des deux obturateurs 121, 123 est réglable en position longitudinale sur la tige 126.

La tige 126 peut coulisser à l'intérieur du corps 110, la position de la tige 126 à l'intérieur du corps 110 étant fonction de la pression de l'huile qui entre dans ledit corps 110 par les passages A et B.

Chacun des deux obturateurs 121 et 123 est de géométrie similaire aux obturateurs 121 et 123 précédemment décrits en regard des figures 5 à 9. Chacun des deux obturateurs de sélecteur 121 et 123 définit ainsi un siège 133 et 134 destiné à accueillir un obturateur de clapet de surpression 131, 132.

Afin de pouvoir être fixé à la tige 126, l'obturateur 121 est traversé en son centre par un orifice dirigé selon l'axe O-O lorsque l'obturateur 121 est montée dans le corps 110, lequel orifice reçoit la tige 126. D'une manière équivalente, l'obturateur 123 est également traversé en son centre par un orifice dirigé selon l'axe O-O lorsque ledit obturateur 123 est monté dans le corps 110 et qui reçoit la tige 126. Les obturateurs 121 et 123 comprennent également des orifices radiaux 129 qui sont orientés radialement par rapport à l'axe O-O lorsque les obturateurs 121 et 123 sont placés dans le corps 110. Les orifices radiaux communiquent avec les orifices par lesquels la tige 126 traverse les obturateurs 121 et 123, de sorte que l'huile peut circuler à l'intérieur des obturateurs 121 et 123 en entrant par les orifices radiaux 129 et en sortant par les orifices par lesquels la tige 126 traverse les obturateurs 121 et 123, ou bien en entrant par les orifices par lesquels la tige 126 traverse les obturateurs 121 et 123 et en sortant par les orifices radiaux 129.

Plus précisément encore chaque obturateur 121, 123 à la forme générale d'un champignon dont la tête évasée accueille les orifices radiaux traversant précités 129 et dont le pied a la forme d'un fût cylindrique engagé sur la tige 126. Les deux obturateurs 121 et 123 sont montés tête bêche, leur tête dirigée l'une vers l'autre et vers l'élément central 130 intercalé. Ces deux têtes définissent des sièges respectifs 133 et 134 pour les obturateurs de clapet de surpression 131 et 132 placés en regard.

Le diamètre des sièges précités 133 et 134 est supérieur au diamètre externe de la tige 126.

Les orifices radiaux 129 permettent d'appliquer la pression provenant des entrées A et B sur les portions de surface d'extrémité des obturateurs 131, 132 des clapets de surpression, circonscrites par les sièges 133 et 134.

Les moyens 130 formant double clapet de surpression comprennent deux obturateurs de surpression 131 et 133 montés à coulissement sur la tige 126 entre les deux obturateurs 121 et 123.

Les portions de surface des extrémités des obturateurs 131 et 132 destinées à reposer sur les sièges 133 et 134 sont de préférence tronconiques.

Chaque obturateur 131 et 132 comprend de préférence un fut cylindrique engagé sur le corps de la tige 126 pour assurer le guidage à coulissement des obturateurs 131 et 132 sur la tige 126 et une tête évasée dirigée vers son siège respectif 133 et 134 défini sur un obturateur de sélecteur 121 et 123.

Le sélecteur 120 comprend en outre un ressort de tarage 128 qui est intercalé entre les deux obturateurs de clapet de surpression 131 et 133, plus précisément entre les têtes évasées de ces deux obturateurs.

On comprend donc que, lorsque la pression de l'huile est inférieure à un seuil prédéterminé, le ressort de tarage 128 sollicite les obturateurs 131 et 132 de surpression contre leur siège respectif 133 et 134. La valeur du seuil prédéterminé de la pression de l'huile à partir de laquelle le ressort de tarage 128 ne parvient plus à plaquer les obturateurs 131 et 132 de surpression contre leur siège respectif 133 et 134 peut être réglée en faisant varier la longueur ou la raideur du ressort de tarage 128, ou bien la position de l'un des obturateurs 121 ou 123 sur la tige 126.

On comprend donc que, comme pour les modes de réalisation qui précèdent, la tige 126 travaille à la traction sous la sollicitation du ressort de tarage 128 qui sollicite les obturateurs de surpression 131 et 132 et les obturateurs de sélecteur 121 et 123.

Par ailleurs, la somme des longueurs des deux obturateurs de surpression 131 et 132 est supérieure à la longueur du rétrécissement 117 (plus précisément la somme de ces longueurs est telle que la distance séparant les surfaces des obturateurs 121 et 123 qui coopèrent avec les sièges 122 et 124 soit supérieure à la distance séparant ces sièges 122 et 124), de sorte que les obturateurs 121 et 123 ne peuvent pas être appuyés sur leur siège respectif 122 et 124 simultanément, seul un des obturateurs 121 ou 123 pouvant être en appui sur son siège 122 ou 124 à un instant donné.

Nous allons maintenant décrire le fonctionnement général du dispositif de limitation de pression 40 représenté sur les figures 15 et 16 lors des différentes phases possibles d'utilisation de la machine hydraulique dans laquelle est disposée ledit dispositif de limitation de pression 40.

La figure 16 représente une phase d'utilisation dans laquelle la première ligne 11 est à la haute pression (haute pression au passage A), et la seconde ligne 12 est à la basse pression (basse pression au passage B). Ainsi, la pression de l'huile qui entre dans le corps 110 par le passage A étant supérieure à la pression de l'huile appliquée au corps 110 par le passage B, l'obturateur 121 est poussé par la pression de l'huile sur son siège 122 (fermant ainsi le clapet anti-retours associé), tandis que l'obturateur 123 est éloigné de son siège 124 (ouvrant ainsi le clapet anti-retours associé).

L'huile qui sort de la ligne de gavage 10, 30 et qui entre dans le corps 110 par le passage C peut donc pénétrer dans la seconde ligne 12 (ligne basse pression) en passant par le clapet de sélection qui est ouvert, tandis que l'huile qui sort de la première ligne 11 et qui rentre dans le corps 110 par le passage A est bloquée par le clapet anti-retours 121/122 qui est fermé.

Par ailleurs la pression de l'huile au niveau du passage A dépassant le seuil prédéterminé fixé par le ressort de tarage 128, le clapet de surpression formé par l'obturateur 131 est ouvert (l'obturateur 131 est séparé de son siège 133 alors que l'obturateur 132 est en appui sur son siège 134).

En cas de surpression inverse sur l'entrée B, la disposition du sélecteur 120 et des clapets de surpression serait inversée : l'obturateur de sélecteur 123 reposerait sur son siège 124 alors que l'obturateur 132 serait séparé de son siège 134, tandis que l'obturateur de sélecteur 121 serait séparé de son siège 122 et l'obturateur 131 serait en appui sur son siège 133.

Et si la pression sur les entrées A et B ne dépasse pas le seuil de surpression défini par le tarage du ressort 128, les deux obturateurs 131 et 132 reposent sur leur siège respectif 133 et 134.

Le cas échéant les obturateurs 131 et 132 du troisième mode de réalisation représentés sur les figures 15 et 16 peuvent être munis de moyens d'amortissement comparables à ceux définis précédemment en regard de la figure 10. Dans le cas du troisième mode de réalisation cependant les moyens d'amortissement peuvent agir dans les deux sens de déplacement relatif entre la tige 126 et les obturateurs de surpression, et donc quelle que soit l'entrée d'alimentation en surpression.

On va maintenant décrire le quatrième mode de réalisation conforme à la présente invention représenté sur les figures 17 à 19 annexées.

Le quatrième mode de réalisation illustré sur les figures 17 à 19 comprend essentiellement un corps 110, par exemple un corps de cartouche comprenant trois entrées A, B et C destinées à être reliées respectivement à deux lignes d'alimentation et à une ligne de gavage, lequel corps de cartouche possède un rétrécissement 117 définissant deux sièges de sélecteur 122, 124, un sélecteur 120 comprenant une tige rigide 126 et deux obturateurs 121, 123, montés à coulissement sur la tige 126, deux butées réglables 127 fixées respectivement sur les extrémités de la tige 126 et deux ressorts 128 intercalés respectivement entre une butée réglable 127 et un obturateur 121, 123 associé pour solliciter chacun des obturateurs de sélecteur contre son siège associé, chacun des deux obturateurs 121, 123 de sélecteur définissant un siège de clapet de surpression 133, 134, et des moyens formant clapets de surpression comprenant un corps en forme de diabolo intercalé entre les obturateurs de sélecteur et définissant deux obturateurs 131, 132 placés en regard des sièges de clapet de surpression, le corps de clapet de surpression étant monté à coulissement sur la tige entre les obturateurs de sélecteur ou libre de coulissement sur la tige entre les obturateurs de sélecteur.

Selon une variante, les deux obturateurs de clapet de surpression sont formés de corps séparés.

On retrouve dans ce quatrième mode de réalisation représenté sur les figures 17 à 19 annexées :
- un dispositif de limitation de pression 40 centré sur un axe longitudinal de symétrie O-O et globalement symétrique de révolution autour de l'axe O-O.
- un corps 110 formé d'une cartouche adaptée pour être intégrée dans toute structure support, par exemple sur le carter d'un moteur hydraulique.
- le corps 110 est de préférence similaire au corps 110 de la première variante,
- le corps 110 étant formé de préférence par assemblage d'un carter 111 et d'un bouchon 112. Le bouchon 112 peut être fixé sur une extrémité axiale du carter 111 par tout moyen approprié, par exemple par sertissage ou de préférence par vissage au niveau de filetages complémentaires 113. Le bouchon 112 peut être équipé d'une forme 114 non cylindrique de révolution permettant son serrage, ainsi que d'une gorge 115 adaptée pour recevoir un joint d'étanchéité 116 en contact avec la structure support.
- le carter 111 comprend au moins trois passages traversants A, B, et C qui correspondent respectivement aux trois ports 42, 44, 46 précités. L'un des passages traversant C est formé en partie médiane sur la longueur du carter 111 et correspond au port 46. Plus précisément, de préférence, il est prévu plusieurs orifices C équi-répartis autour de l'axe O-O, formant ainsi le port 46. Les passages A et B sont formés respectivement de part et d'autre du passage médian C. Plus précisément, de préférence, le passage B est formé de plusieurs orifices équi-répartis autour de l'axe O-O, formant ainsi le port 44. Le passage A peut également être formé de plusieurs orifices équi-répartis autour de l'axe O-O, formant ainsi le port 42. Cependant, selon le mode de réalisation préférentiel, pour des raisons de fabrication et d'assemblage, le passage A est formé d'un orifice qui débouche axialement sur le carter 111 à l'extrémité opposée au bouchon 112.
- deux gorges annulaires 102, 104, formées sur le carter 110, disposées entre les passages A, B et C, destinées à recevoir des joints respectifs 103, 105 en contact avec la structure support et permettant d'isoler entre elles les liaisons hydrauliques assurées vers les passages A, B et C.
- un rétrécissement 117 formé sur la surface interne du carter 111 au niveau du passage médian C et qui s'étend axialement de part et d'autre du passage C. Le rétrécissement 117 définit respectivement sur ses deux extrémités axiales deux sièges 122, 124 associés au sélecteur 120. Le rétrécissement 117 qui forme les deux sièges 122, 124 peut être venu de matière sur la surface interne du carter 111 ou être formé d'une pièce séparée rapportée sur la surface du carter 111 et fixée par tout moyen approprié, par exemple par sertissage. Les deux sièges 122, 124 sont orientés respectivement vers les extrémités axiales du carter 111.

Le sélecteur 120 comprend deux obturateurs 121 et 123, qui sont configurés pour coopérer respectivement avec les sièges 122 et 124 formés dans le carter 111 de manière à former deux clapets anti-retours.

Lorsque l'obturateur 121 est en appui contre le siège 122, le clapet anti-retours correspondant du sélecteur 120 est fermé, la connexion fluidique est coupée entre le passage A et le passage C (entre le port 42 et le port 46) tant que la pression de l'huile reste inférieure à un seuil déterminé.

D'une manière équivalente, lorsque l'obturateur 123 est en appui contre le siège 124, le clapet anti-retours correspondant du sélecteur 120 est fermé, la connexion fluidique est coupée entre le passage B et le passage C (entre le port 44 et le port 46) tant que la pression de l'huile reste inférieure à un certain seuil.

Les portions de surface des obturateurs 121 et 123 destinées à reposer sur les sièges 122 et 124 sont de préférence tronconiques.

Le sélecteur 120 comprend également une tige 126 centrée sur l'axe O-O. Les deux obturateurs 121 et 123 sont montés à coulissement sur la tige 126 selon l'axe O-O.

La tige 126 peut coulisser à l'intérieur du corps 110, la position de la tige 126 à l'intérieur du corps 110 étant fonction de la pression de l'huile qui entre dans ledit corps 110 par les passages A et B.

Chacun des deux obturateurs 121 et 123 est de géométrie similaire aux obturateurs 121 et 123 précédemment décrits en regard des figures 5 à 9. Chacun des deux obturateurs de sélecteur 121 et 123 définit ainsi un siège 133 et 134 destiné à accueillir un obturateur de clapet de surpression 131, 132.

Afin de pouvoir être fixé à la tige 126, l'obturateur 121 est traversé en son centre par un orifice dirigé selon l'axe O-O lorsque l'obturateur 121 est montée dans le corps 110, lequel orifice reçoit la tige 126. D'une manière équivalente, l'obturateur 123 est également traversé en son centre par un orifice dirigé selon l'axe O-O lorsque ledit obturateur 123 est monté dans le corps 110 et qui reçoit la tige 126. Les obturateurs 121 et 123 comprennent également des orifices radiaux 129 qui sont orientés radialement par rapport à l'axe O-O lorsque les obturateurs 121 et 123 sont placés dans le corps 110. Les orifices radiaux communiquent avec les orifices par lesquels la tige 126 traverse les obturateurs 121 et 123, de sorte que l'huile peut circuler à l'intérieur des obturateurs 121 et 123 en entrant par les orifices radiaux 129 et en sortant par les orifices par lesquels la tige 126 traverse les obturateurs 121 et 123, ou bien en entrant par les orifices par lesquels la tige 126 traverse les obturateurs 121 et 123 et en sortant par les orifices radiaux 129.

Plus précisément encore chaque obturateur 121, 123 à la forme générale d'un champignon dont la tête évasée accueille les orifices radiaux traversant précités 129 et dont le pied a la forme d'un fût cylindrique engagé sur la tige 126. Les deux obturateurs 121 et 123 sont montés tête bêche, leur tête dirigée l'une vers l'autre et vers l'élément central 130 intercalé. Ces deux têtes définissent des sièges respectifs 133 et 134 pour les obturateurs de clapet de surpression 131 et 132 placés en regard.

Le diamètre des sièges précités 133 et 134 est supérieur au diamètre externe de la tige 126.

Les orifices radiaux 129 permettent d'appliquer la pression provenant des entrées A et B sur les portions de surface d'extrémité des obturateurs 131, 132 des clapets de surpression, circonscrites par les sièges 133 et 134.

Les moyens formant double clapet de surpression comprennent une pièce 130 en forme de diabolo dont les deux extrémités évasées constituent respectivement deux obturateurs de surpression 131 et 133 disposés en regard des sièges 133 et 134.

La pièce en diabolo 130 peut être montée à coulissement sur la tige 126, ou fixée rigidement à la tige 126, entre les deux obturateurs 121 et 123.

Les portions de surface des extrémités des obturateurs 131 et 132 destinées à reposer sur les sièges 133 et 134 sont de préférence tronconiques.

Le sélecteur 120 comprend en outre deux butées 127 fixées respectivement sur les extrémités de la tige 126, ainsi que deux ressorts de tarage 128 qui sont respectivement intercalés entre une butée 127 et l'un des deux obturateurs 121 et 123. Ainsi les ressorts 128 sollicitent chaque obturateur de sélecteur 121, 123 vers l'obturateur 131, 132 respectivement associé du double clapet de surpression.

L'une au moins des butées 127 est de préférence vissée en position réglable sur la tige 126.

On comprend donc que, lorsque la pression de l'huile est inférieure à un seuil prédéterminé, les ressort de tarage 128 sollicitent les obturateurs 131 et 132 de surpression contre leur siège respectif 133 et 134. La valeur des seuils prédéterminés de pression d'huile à partir de laquelle les ressorts de tarage 128 ne parviennent plus à plaquer les obturateurs 131 et 132 de surpression contre leur siège respectif 133 et 134 peut être réglée en faisant varier la longueur ou la raideur de chaque ressort de tarage 128, ou bien la position de l'une des butées 127 sur la tige 126.

On comprend donc que, comme pour les modes de réalisation qui précèdent, la tige 126 travaille à la traction sous la sollicitation des ressorts de tarage 128 qui sollicitent les obturateurs de surpression 131 et 132 et les obturateurs de sélecteur 121 et 123.

Par ailleurs, la longueur de la pièce formant les deux obturateurs de surpression 131 et 132 est supérieure à la longueur du rétrécissement 117 (plus précisément cette longueur est telle que la distance séparant les surfaces des obturateurs 121 et 123 qui coopèrent avec les sièges 122 et 124 soit supérieure à la distance séparant ces sièges 122 et 124), de sorte que les obturateurs 121 et 123 ne peuvent pas être appuyés sur leur siège respectif 122 et 124 simultanément, seul un des obturateurs 121 ou 123 pouvant être en appui sur son siège 122 ou 124 à un instant donné.

Le cas échéant les deux obturateurs 131, 132 du clapet de surpression peuvent être formés non pas d'une pièce unique 130, mais de deux pièces séparées adossées, lesquelles sont soit fixées sur la tige 126, soit libre de translation sur celle-ci.

L'homme de l'art comprendra que selon que les obturateurs 131 et 132 sont fixés sur la tige 126 ou libres de coulissement sur celle-ci, le ressort de tarage 128 qui intervient pour contrôler l'ouverture du clapet de surpression, en cas de surpression, diffère.

Lorsque les obturateurs 131 et 132 sont fixés sur la tige 126, le ressort 128 qui intervient pour contrôler l'ouverture d'un clapet de surpression 131 ou 132, en cas de surpression, est essentiellement le ressort 128 associé au même obturateur de sélecteur 121 ou 123.

En revanche lorsque les obturateurs 131 et 132 sont libres de coulissement sur la tige 126, le ressort 128 qui intervient pour contrôler l'ouverture d'un clapet de surpression 131 ou 132, en cas de surpression, est essentiellement le ressort 128 associé à l'autre obturateur de sélecteur 123 ou 121, puisque c'est ce ressort qui travaille à la compression.

Nous allons maintenant décrire le fonctionnement général du dispositif de limitation de pression 40 représenté sur les figures 17 à 19 lors des différentes phases possibles d'utilisation de la machine hydraulique dans laquelle est disposée ledit dispositif de limitation de pression 40.

La figure 18 représente une phase d'utilisation dans laquelle la première ligne 11 est à la haute pression (haute pression au passage A), et la seconde ligne 12 est à la basse pression (basse pression au passage B). Ainsi, la pression de l'huile qui entre dans le corps 110 par le passage A étant supérieure à la pression de l'huile appliquée au corps 110 par le passage B, l'obturateur 121 est poussé par la pression de l'huile sur son siège 122 (fermant ainsi le clapet anti-retours associé), tandis que l'obturateur 123 est éloigné de son siège 124 (ouvrant ainsi le clapet anti-retours associé).

L'huile qui sort de la ligne de gavage 10, 30 et qui entre dans le corps 110 par le passage C peut donc pénétrer dans la seconde ligne 12 (ligne basse pression) en passant par le clapet de sélection qui est ouvert, tandis que l'huile qui sort de la première ligne 11 et qui rentre dans le corps 110 par le passage A est bloquée par le clapet anti-retours 121/122 qui est fermé.

Par ailleurs selon la figure 18, la pression de l'huile au niveau du passage A ne dépassant pas le seuil prédéterminé fixé par le ressort de tarage 128 associé, le clapet de surpression formé par l'obturateur 131 est fermé (l'obturateur 131 repose sur son siège 133 et de même l'obturateur 132 est en appui sur son siège 134).

En cas de surpression inverse sur l'entrée B, la disposition du sélecteur 120 serait inversée : l'obturateur de sélecteur 123 reposerait sur son siège 124 alors que l'obturateur 132 serait séparé de son siège 134.

Et si la pression sur l'une des entrées A et B dépasse le seuil de surpression défini par le tarage du ressort 128 associé, l'obturateurs correspondant 131 et 132 s'écarte de son siège respectif 133 ou 134, comme illustré sur la figure 19, pour assurer une évacuation de la surpression vers la ligne de gavage et/ou l'autre ligne d'alimentation.
Le cas échéant les moyens obturateurs 131 et 132 du quatrième mode de réalisation représentés sur les figures 17 à 19 peuvent être munis de moyens d'amortissement comparables à ceux définis précédemment en regard de la figure 10, lorsque ces moyens obturateurs 131 et 132 sont montés à coulissement sur la tige 126, ceci que les moyens obturateurs 131 et 132 soient réalisés sous forme d'une pièce unique ou sous forme de deux pièces séparées.

Dans le cas du quatrième mode de réalisation cependant les moyens d'amortissement peuvent agir dans les deux sens de déplacement relatif entre la tige 126 et les obturateurs de surpression, et donc quelle que soit l'entrée d'alimentation en surpression.

L'homme de l'art comprendra que la réalisation conforme à l'invention permet d'intégrer l'ensemble des fonctions dans un composant en forme de cartouche tout en permettant un réglage simple et fiable, ainsi que de manière indépendante, du tarage de chaque clapet de surpression. L'invention peut ainsi être intégrée ou juxtaposée à l'une des machines M1 M2.
La réalisation du corps de cartouche avec un bouchon amovible 112 permet un réglage simple de la pression seuil d'ouverture des clapets de surpression. Il suffit en effet de retirer le bouchon 112 pour accéder aux éléments de réglage du ou des ressort(s) 128, régler ceux-ci, puis remettre le bouchon 112 en place.
Bien entendu la présente invention n'est pas limitée aux modes de réalisation particuliers qui viennent d'être décrits mais s'étend à toutes variantes dans son esprit.
Par ailleurs on a décrit précédemment le dispositif conforme à la présente invention sous forme d'une cartouche autonome adaptée pour être fixée, par exemple par vissage, dans un logement complémentaire formé dans un corps support.
En variante comme illustré sur la figure 22 cependant on peut omettre le corps de cartouche et disposer directement les éléments constituant le sélecteur 120 et les clapets de surpression dans le bloc du corps support usiné sous réserve de ménager les mêmes formes et les mêmes fonctions sur ce bloc de corps support. Dans le cas où le bloc de corps support comporte ainsi un rétrécissement 117 définissant les deux sièges 122, 144, il est nécessaire pour le montage de ménager un accès des deux côtés de ce rétrécissement. Il est alors nécessaire de prévoir deux bouchons d'obturation de ces accès. Une telle disposition facilite l'installation et le réglage.

On a schématisé sur les figures 17 à 19 un corps d'obturateur 130 en forme de diabolo rapporté sur une tige 126 portant deux excroissances sur ses extrémités. En pratique pour permettre l'assemblage d'une telle structure, la pièce en diabolo doit être formée de deux coquilles complémentaires rapportées en positions diamétralement opposées sur la tige 126 ou la tige 126 doit elle-même être formée de deux pièces assemblées entre elles.
On a représenté sur les figures 20 et 21 différentes variantes de réalisation d'amortisseurs conforme à la présente invention.
La figure 20 représente une tige 126 possédant une excroissance 1260 sur sa longueur. Deux obturateurs 132 et 134 sont engagés sur la tige 126, respectivement de part et d'autre de l'excroissance 1260. Chaque obturateur 132, 134 possède une portion de diamètre interne complémentaire de la tige 126 et une portion de diamètre interne complémentaire de l'excroissance 1260. Il est ainsi défini entre chaque obturateur 132, 134 et la tige 126 possédant l'excroissance 1260, une chambre de volume variable qui amortit le déplacement relatif entre chaque obturateur 132, 134 et la tige 126 par fuite contrôlée d'huile au niveau du canal annulaire calibré défini entre l'obturateur respectif 132, 134 et la tige 126.
On voit sur la figure 20 que pour permettre le montage d'un obturateur 134 sur la tige 126, une butée évasée 1262 prévue sur l'extrémité associée de la tige 126, n'est pas venue de matière sur la tige 126, mais rapportée sur cette tige 126.
Les moyens amortisseurs représentés sur la figure 20 permettent un amortissement du déplacement relatif dans les deux sens de déplacement.
La figure 21 illustre une autre variante de réalisation adaptée pour un amortissement du déplacement dans un seul sens de déplacement.
Selon la figure 21 il est prévu une tige 126 possédant une excroissance 1260 sur l'une de ses extrémités. Un corps en diabolo 130 définissant deux obturateurs 132 et 134 est engagé sur la tige 126, en regard de l'excroissance 1260. Le corps 130 possède une portion de diamètre interne complémentaire de la tige 126 et une portion de diamètre interne complémentaire de l'excroissance 1260. Il est ainsi défini entre le corps 130 et la tige 126, au niveau de l'excroissance 1260, une chambre de volume variable qui amortit le déplacement relatif entre le corps 130 et la tige 126, par fuite contrôlée d'huile au niveau du canal annulaire calibré défini entre le corps 130 et la tige 126.
On voit sur la figure 21 que pour permettre le montage du corps 130 sur la tige 126, une butée évasée 1262 prévue sur l'extrémité associée de la tige 126, n'est pas venue de matière sur la tige 126, mais rapportée sur cette tige 126. Il peut en être de même d'une seconde butée 1264 prévue sur l'extrémité opposée de la tige 126.

## Revendications

1. Dispositif de limitation de pression adapté pour être installé dans un système comprenant une première ligne (11) et une deuxième ligne (12) d'alimentation pouvant comprendre de l'huile sous pression et comprenant une ligne d'évacuation et/ou gavage (10), le dispositif de limitation comprenant des moyens (131, 132, 133, 134) formant deux clapets associés respectivement à l'une des deux lignes d'alimentation (11, 12) et adaptés pour s'ouvrir en cas de surpression au-dessus d'un seuil prédéterminé sur la ligne d'alimentation associée afin de décharger la surpression correspondante vers la ligne d'évacuation et/ou gavage (10) ou vers l'autre ligne d'alimentation (11, 12), **caractérisé en ce que** les deux clapets comprennent une tige support commune (126) qui travaille à la traction sous la sollicitation d'au moins un ressort (128) définissant un tarage qui correspond audit seuil prédéterminé.

2. Dispositif selon la revendication 1, **caractérisé par le fait que** le dispositif de limitation de pression intègre des moyens (121, 122, 123, 124) qui forment deux clapets anti-retours associés respectivement à l'une des deux lignes (11, 12), pour le gavage.

3. Dispositif selon l'une des revendications 1 ou 2, **caractérisé par le fait qu'**il comprend un ressort de tarage unique (128).

4. Dispositif selon l'une des revendications 1 ou 2, **caractérisé par le fait qu'**il comprend deux ressorts de tarage (128) associés respectivement aux deux clapets de limitation de pression (131, 132, 133, 134).

5. Dispositif selon l'une des revendications 1 à 4, **caractérisé par le fait qu'**il comprend un corps (110) comprenant trois entrées (A, B et C) destinées à être reliées respectivement à deux lignes d'alimentation et à une ligne de gavage, lequel corps de cartouche possède un rétrécissement (117) définissant deux sièges de sélecteur (122, 124), un sélecteur (120) comprenant une tige rigide (126) et deux obturateurs (121, 123), l'un (121) des obturateurs étant relié rigidement à une première extrémité de la tige (126), et le deuxième obturateur (123) étant monté à coulissement sur la tige (126), une butée (127) réglable sur la seconde extrémité de la tige (126) et un ressort (128) intercalé entre la butée réglable (127) et le deuxième obturateur (123), chacun des deux obturateurs (121, 123) de sélecteur définissant un siège de clapet de surpression (133, 134), et des moyens formant double clapet de surpression comprenant un corps en forme de diabolo (130) monté à coulissement sur la tige 126 et définissant deux obturateurs (131, 132( placés en regard des sièges de clapet de surpression (133, 134).

6. Dispositif selon l'une des revendications 1 à 4, **caractérisé par le fait qu'**il comprend un corps (110) comprenant trois entrées (A, B et C) destinées à être reliées respectivement à deux lignes d'alimentation et à une ligne de gavage, lequel corps de cartouche possède un rétrécissement (117) définissant deux sièges de sélecteur (122, 124), un sélecteur (120) en forme de cage comprenant deux évasements sur ses extrémités formant deux obturateurs en regard des sièges de sélecteur et possédant un siège interne de clapet de surpression, et des moyens formant double clapet de surpression comprenant une tige rigide (126) et un obturateur relié rigidement à une première extrémité de la tige (126) en regard du siège de clapet de surpression, l'obturateur du clapet de surpression comprenant deux surfaces de sollicitation placées respectivement de part et d'autre du siège de clapet de surpression et exposées respectivement aux pression appliquées aux deux entrées destinées à être reliées aux lignes d'alimentation et un ressort monté entre une butée (127) réglable sur la seconde extrémité de la tige (126) et le sélecteur.

7. Dispositif selon l'une des revendications 1 à 4, **caractérisé par le fait qu'**il comprend essentiellement un corps (110) comprenant trois entrées (A, B et C) destinées à être reliées respectivement à deux lignes d'alimentation et à une ligne de gavage, lequel corps de cartouche possède un rétrécissement (117) définissant deux sièges de sélecteur (122, 124), un sélecteur (120) comprenant une tige rigide (126) et deux obturateurs (121, 123), reliés rigidement à des extrémités respectives de la tige (126), la position de l'un au moins de ces deux obturateurs (121, 123) étant de préférence réglable sur la tige (126), chacun des deux obturateurs (121, 123) de sélecteur définissant un siège de clapet de surpression (133, 134), deux clapets de surpression comprenant deux obturateurs séparés (131, 132) montés à coulissement sur la tige entre les obturateurs de sélecteur et un ressort (128) intercalé entre les deux obturateurs (131, 132à de clapets de surpression.

8. Dispositif selon l'une des revendications 1 à 4, **caractérisé par le fait qu'**il comprend essentiellement un corps (110) comprenant trois entrées (A, B et C) destinées à être reliées respectivement à deux lignes d'alimentation et à une ligne de gavage, lequel corps de cartouche possède un rétrécissement (117) définissant deux sièges de sélecteur (122, 124), un sélecteur (120) comprenant une tige rigide (126) et deux obturateurs (121, 123), montés à coulissement sur la tige (126), deux butées réglables (127) fixées respectivement sur les extrémités de la tige (126) et deux ressorts (128) intercalés respectivement entre une butée réglable (127) et un obturateur (121, 123) associé pour solliciter chacun des obturateurs de sélecteur contre son siège associé, chacun des deux obturateurs (121, 123) de sélecteur définissant un siège de clapet de surpression (133, 134), et des moyens formant clapets de surpression comprenant un corps en forme de diabolo intercalé entre les obturateurs de sélecteur et définissant deux obturateurs (131, 132) placés en regard des sièges de clapet de surpression, le corps de clapet de surpression étant monté à coulissement sur la tige entre les obturateurs de sélecteur ou libre de coulissement sur la tige entre les obturateurs de sélecteur.

9. Dispositif selon l'une des revendications 1 à 8, **caractérisé par le fait que** un corps recevant les moyens sélecteur et formant clapet de surpression, est constitué d'une cartouche destinée à être placée dans un bloc foré avec des canaux d'alimentation correspondants à des ports d'entrée (A, B, C) formés sur la cartouche.

10. Dispositif selon l'une des revendications 1 à 9, **caractérisé par le fait que** le corps de sélecteur a la forme d'une cage comportant un élément central (220) qui porte sur ses extrémités deux excroissances formant obturateur (221, 223).

11. Dispositif selon l'une des revendications 1 à 10, **caractérisé par le fait que** les moyens formant clapet de surpression ont la forme d'un diabolo comportant un élément central (130) qui porte sur ses extrémités deux excroissances formant obturateur (131, 132).

12. Dispositif selon l'une des revendications 1 à 11, **caractérisé en ce que** l'obturateur (711, 162) possède au moins deux surfaces (S1, S2) situées de part et d'autre du siège associé (155) et soumises respectivement aux pressions venant des deux lignes d'alimentation (11, 12).

13. Dispositif selon l'une des revendications 1 à 12, **caractérisé en ce qu'**il comprend des moyens qui imposent qu'un seul obturateur du sélecteur (121, 123) ne repose sur son siège à un instant donné.

14. Système d'assistance hydraulique **caractérisé en ce qu'**il comprend un dispositif de limitation conforme à l'une des revendications précédentes.

15. Véhicule équipé d'un dispositif de limitation de pression conforme à l'une des revendications 1 à 13 et/ou un système d'assistance hydraulique conforme à la revendication 14.

## Patentansprüche

1. Druckbegrenzungsvorrichtung, die angepasst ist, um in einem System eingerichtet zu werden, das eine erste (11) und eine zweite Versorgungsleitung (12) umfasst, die Öl unter Druck umfassen können, und eine Ablass- und/oder Ladeleitung (10) umfasst, wobei die Begrenzungsvorrichtung Mittel (131, 132, 133, 134) umfasst, die zwei Ventile bilden, die jeweils einer von den zwei Versorgungsleitungen (11, 12) zugehörig sind und angepasst sind, um sich im Fall von Überdruck über einer vorbestimmten Schwelle auf der zugehörigen Versorgungsleitung zu öffnen, um den entsprechenden Überdruck hin zu der Ablass- und/oder Ladeleitung (10) oder hin zu der anderen Versorgungsleitung (11, 12) zu entlasten, **dadurch gekennzeichnet, dass** die zwei Ventile eine gemeinsame Stützspindel (126) umfassen, die unter der Beanspruchung von mindestens einer Feder (128) unter Zug arbeitet, die eine Kalibrierung definiert, die der vorbestimmten Schwelle entspricht.

2. Vorrichtung nach Anspruch 1, **dadurch gekennzeichnet, dass** die Druckbegrenzungsvorrichtung Mittel (121, 122, 123, 124), die zwei Rückschlagventile bilden, die jeweils einer von den zwei Leitungen (11, 12) zugehörig sind, für das Laden beinhaltet.

3. Vorrichtung nach einem der Ansprüche 1 bis 2, **dadurch gekennzeichnet, dass** sie eine einzige Kalibrierfeder (128) umfasst.

4. Vorrichtung nach einem der Ansprüche 1 oder 2, **dadurch gekennzeichnet, dass** sie zwei Kalibrierfedern (128) umfasst, die jeweils den zwei Druckbegrenzungsventilen (131, 132, 133, 134) zugehörig sind.

5. Vorrichtung nach einem der Ansprüche 1 bis 4, **dadurch gekennzeichnet, dass** sie einen Körper (110), der drei Eingänge (A, B und C) umfasst, die dazu bestimmt sind, mit zwei Versorgungsleitungen beziehungsweise mit einer Ladeleitung verbunden zu sein, wobei der Einsatzkörper eine Verjüngung (117) besitzt, die zwei Schaltersitze (122, 124) definiert, einen Schalter (120), der eine starre Spindel (126) und zwei Verschlussorgane (121, 123) umfasst, wobei eines (121) von den Verschlussorganen starr mit einem ersten Ende der Spindel (126) verbunden ist und das zweite Verschlussorgan (123) verschiebbar auf der Spindel (126) montiert ist, einen Anschlag (127), der auf dem zweiten Ende der Spindel (126) regulierbar ist, und eine Feder (128), die zwischen dem regulierbaren Anschlag (127) und dem zweiten Verschlussorgan (123) eingeschoben ist, wobei jedes von den zwei Schalterverschlussorganen (121, 123) einen Überdruckventilsitz (133, 134) definiert, und Mittel umfasst, die ein Doppelüberdruckventil bilden, das einen Körper mit der Form eines Doppelkegels (130) umfasst, der verschiebbar auf der Spindel (126) gelagert ist, und zwei Verschlussorgane (131, 132) definiert, die den Überdruckventilsitzen (133, 134) gegenüberliegend angeordnet sind.

6. Vorrichtung nach einem der Ansprüche 1 bis 4, **dadurch gekennzeichnet, dass** sie einen Körper (110), der drei Eingänge (A, B und C) umfasst, die dazu bestimmt sind, mit zwei Versorgungsleitungen beziehungsweise mit einer Ladeleitung verbunden zu sein, wobei der Einsatzkörper eine Verjüngung (117) besitzt, die zwei Schaltersitze (122, 124) definiert, einen Schalter (120) mit der Form eines Käfigs, der zwei Erweiterungen an seinen Enden, die zwei Verschlussorgane bilden, die den Schaltersitzen gegenüberliegen und einen inneren Überdruckventilsitz besitzen, und Mittel umfasst, die ein Doppelüberdruckventil bilden, das eine starre Spindel (126) und ein Verschlussorgan umfasst, das starr mit einem ersten Ende der Spindel (126) dem Überdruckventilsitz gegenüberliegend verbunden ist, wobei das Verschlussorgan des Überdruckventils zwei Beanspruchungsflächen umfasst, die jeweils auf beiden Seiten des Überdruckventilsitzes platziert sind und jeweils den Drücken ausgesetzt sind, die an den zwei Eingängen angewandt werden, die dazu bestimmt sind, mit den Versorgungsleitungen verbunden zu sein, und eine Feder umfasst, die zwischen einem Anschlag (127), der am zweiten Ende der Spindel (126) regulierbar ist, und dem Schalter montiert ist.

7. Vorrichtung nach einem der Ansprüche 1 bis 4, **dadurch gekennzeichnet, dass** sie im Wesentlichen einen Körper (110), der drei Eingänge (A, B und C) umfasst, die dazu bestimmt sind, mit zwei Versorgungsleitungen beziehungsweise einer Ladeleitung verbunden zu sein, wobei der Einsatzkörper eine Verjüngung (117) besitzt, die zwei Schaltersitze (122, 124) definiert, einen Schalter (120), der eine starre Spindel (126) und zwei Verschlussorgane (121, 123) umfasst, die starr mit entsprechenden Enden der Spindel (126) verbunden sind, wobei die Position von mindestens einem von diesen zwei Verschlussorganen (121, 123) vorzugsweise auf der Spindel (126) regulierbar ist, wobei jedes von den zwei Schalterverschlussorganen (121, 123) einen Überdruckventilsitz (133, 134) definiert, zwei Überdruckventile, die zwei getrennte Verschlussorgane (131, 132) umfassen, die an der Spindel zwischen den Schalterverschlussorganen verschiebbar gelagert sind, und eine Feder (128) umfasst, die zwischen den zwei Überdruckventil-Verschlussorganen (131, 132) eingeschoben ist.

8. Vorrichtung nach einem der Ansprüche 1 bis 4, **dadurch gekennzeichnet, dass** sie im Wesentlichen einen Körper (110), der drei Eingänge (A, B und C), die dazu bestimmt sind, mit zwei Versorgungsleitungen beziehungsweise einer Ladeleitung verbunden zu sein, wobei der Einsatzkörper eine Verjüngung (117) besitzt, die zwei Schaltersitze (122, 124) definiert, einen Schalter (120), der eine starre Spindel (126) und zwei Verschlussorgane (121, 123) umfasst, die an der Spindel (126) verschiebbar gelagert sind, zwei regulierbare Anschläge (127), die jeweils an den Enden der Spindel (126) befestigt sind, und zwei Federn (128) umfasst, die zwischen einem regulierbaren Anschlag (127) und einem zugehörigen Verschlussorgan (121, 123) eingeschoben sind, um jedes von den Schalterverschlussorganen gegen seinen zugehörigen Sitz zu beanspruchen, wobei jedes von den zwei Schalterverschlussorganen (121, 123) einen Überdruckventilsitz (133, 134) definiert, und Mittel umfasst, die Überdruckventile bilden, die einen Körper mit der Form eines Doppelkegels umfassen, der zwischen den Schalterverschlussorganen eingeschoben ist und zwei Verschlussorgane (131, 132) definiert, die den Überdruckventilsitzen gegenüberliegend platziert sind, wobei der Überdruckventilkörper verschiebbar an der Spindel zwischen den Schalterverschlussorganen oder an der Spindel frei zwischen den Schalterverschlussorganen verschiebbar gelagert ist.

9. Vorrichtung nach einem der Ansprüche 1 bis 8, **dadurch gekennzeichnet, dass** ein Körper, der die Schaltermittel aufnimmt und ein Überdruckventil bildet, aus einem Einsatz besteht, der dazu bestimmt ist, in einem gebohrten Block mit Versorgungskanälen platziert zu sein, die Eingangsöffnungen (A, B, C) entsprechen, die an dem Einsatz gebildet sind.

10. Vorrichtung nach einem der Ansprüche 1 bis 9, **dadurch gekennzeichnet, dass** der Schalterkörper die Form eines Käfigs aufweist, der ein mittleres Element (220) umfasst, das an seinen Enden zwei Ausstülpungen trägt, die ein Verschlussorgan (221, 223) bilden.

11. Vorrichtung nach einem der Ansprüche 1 bis 10, **dadurch gekennzeichnet, dass** die Mittel, die das Überdruckventil bilden, die Form eines Doppelkegels aufweisen, der ein mittleres Element (130) umfasst, das an seinen Enden zwei Ausstülpungen bildet, die ein Verschlussorgan (131, 132) bilden.

12. Vorrichtung nach einem der Ansprüche 1 bis 11, **dadurch gekennzeichnet, dass** das Verschlussorgan (711, 162) mindestens zwei Flächen (S1, S2) besitzt, die sich auf beiden Seiten des zugehörigen Sitzes (155) befinden und jeweils den Drücken ausgesetzt sind, die von den zwei Versorgungsleitungen (11, 12) kommen.

13. Vorrichtung nach einem der Ansprüche 1 bis 12, **dadurch gekennzeichnet, dass** sie Mittel umfasst, die gebieten, dass ein einziges Verschlussorgan des Schalters (121, 123) an einem gegebenen Zeitpunkt nicht auf seinem Sitz ruht.

14. Hydraulisches Unterstützungssystem, **dadurch gekennzeichnet, dass** es eine Begrenzungsvorrichtung nach einem der vorhergehenden Ansprüche umfasst.

15. Fahrzeug, das mit einer Druckbegrenzungsvorrichtung nach einem der Ansprüche 1 bis 13 und/oder einer hydraulischen Unterstützungsvorrichtung nach Anspruch 14 ausgerüstet ist.

## Claims

1. A pressure-limiting device adapted to be installed in a system comprising a first supply line (11) and a second supply line (12) which may comprise pressurized oil and comprising an evacuation and/or a booster line (10), the limiting device comprising means (131, 132, 133, 134) forming two valves associated respectively with one of the two supply lines (11, 12) and adapted to open in the event of an overpressure above a predetermined threshold on the associated supply line in order to discharge the corresponding overpressure towards the evacuation and/or booster line (10) or towards the other supply line (11, 12),
**characterized in that** the two valves comprise a common support rod (126) which operates in traction under the stress of at least one spring (128) defining a calibration that corresponds to said predetermined threshold.

2. The device according to claim 1, **characterized in that** the pressure-limiting device integrates means (121, 122, 123, 124) which form two check valves associated respectively with one of the two lines (11, 12), for the boosting.

3. The device according to any of claims 1 or 2, **characterized in that** it comprises a single calibration spring (128).

4. The device according to any of claims 1 or 2, **characterized in that** it comprises two calibration springs (128) associated respectively with the two pressure-limiting valves (131, 132, 133, 134).

5. The device according to any of claims 1 to 4, **characterized in that** it comprises a body (110) comprising three inlets (A, B and C) intended to be connected respectively to two supply lines and to a booster line, which cartridge body has a narrowing (117) defining two selector seats (122, 124), one selector (120) comprising a rigid rod (126) and two shutters (121, 123), one (121) of the shutters being rigidly connected to a first end of the rod (126), and the second shutter (123) being slidably mounted on the rod (126), a stop (127) adjustable on the second end of the rod (126) and a spring (128) interposed between the adjustable stop (127) and the second shutter (123), each of the two selector shutters (121, 123) defining a pressure relief valve seat (133, 134), and means forming a double pressure relief valve comprising a diabolo-shaped body (130) slidably mounted on the rod (126) and defining two shutters (131, 132) placed opposite the pressure relief valve seats (133, 134).

6. The device according to any of claims 1 to 4, **characterized in that** it comprises a body (110) comprising three inlets (A, B and C) intended to be connected respectively to two supply lines and to a booster line, which cartridge body has a narrowing (117) defining two selector seats (122, 124), one selector (120) in the form of a cage comprising two flares on its ends forming two shutters opposite the selector seats and having an internal pressure relief valve seat, and means forming a double pressure relief valve comprising a rigid rod (126) and a shutter rigidly connected to a first end of the rod (126) opposite the overpressure valve seat, the shutter of the pressure relief valve comprising two stress surfaces placed respectively on either side of the pressure relief valve seat and exposed respectively to the pressures applied to the two inlets intended to be connected to the supply lines and a spring mounted between a stop (127) adjustable on the second end of the rod (126) and the selector.

7. The device according to any of claims 1 to 4, **characterized in that** it essentially comprises a body (110) comprising three inlets (A, B and C) intended to be connected respectively to two supply lines and a booster line, which cartridge body has a narrowing (117) defining two selector seats (122, 124), a selector (120) comprising a rigid rod (126) and two shutters (121, 123), rigidly connected to respective ends of the rod (126), the position of one at least of these two shutters (121, 123) being preferably adjustable on the rod (126), each of the two selector shutters (121, 123) defining a pressure relief valve seat (133, 134), two pressure relief valves comprising two separate shutters (131, 132) slidably mounted on the rod between the selector shutters and a spring (128) interposed between the two pressure relief valve shutters (131, 132).

8. The device according to any of claims 1 to 4, **characterized in that** it essentially comprises a body (110) comprising three inlets (A, B and C) intended to be connected respectively to two supply lines and a booster line, which cartridge body has a narrowing (117) defining two selector seats (122, 124), a selector (120) comprising a rigid rod (126) and two shutters (121, 123), slidably mounted on the rod (126), two adjustable stops (127) respectively fixed on the ends of the rod (126) and two springs (128) interposed respectively between an adjustable stop (127) and an associated shutter (121, 123) to stress each of the selector shutters against its associated seat, each of the two selector shutters (121, 123) defining a pressure relief valve seat (133, 134), and means forming pressure relief valves comprising a diabolo-shaped body interposed between the selector shutters and defining two shutters (131, 132) placed opposite the pressure relief valve seats, the pressure relief valve body being slidably mounted on the rod between the selector shutters or free to slide on the rod between the selector shutters.

9. The device according to any of claims 1 to 8, **characterized in that** a body receiving the selector means and forming a pressure relief valve, consists of a cartridge intended to be placed in a block drilled with supply channels corresponding to inlet ports (A, B, C) formed on the cartridge.

10. The device according to any of claims 1 to 9, **characterized in that** the selector body has the shape of a cage including a central element (220) which carries on its ends two projections forming a shutter (221, 223) .

11. The device according to any of claims 1 to 10, **characterized in that** the means forming a pressure relief valve have the shape of a diabolo including a central element (130) which carries on its ends two projections forming a shutter (131, 132).

12. The device according to any of claims 1 to 11, **characterized in that** the shutter (711, 162) has at least two surfaces (S1, S2) located on either side of the associated seat (155) and subject respectively to pressures coming from the two supply lines (11, 12).

13. The device according to any of claims 1 to 12, **characterized in that** it comprises means requiring that only one shutter of the selector (121, 123) rests on its seat at a given time.

14. A hydraulic assistance system **characterized in that** it comprises a limiting device according to any of the preceding claims.

15. A vehicle equipped with a pressure-limiting device according to any of claims 1 to 13 and/or a hydraulic assistance system according to claim 14.
